# EUROPEAN PATENT APPLICATION

(11) **EP 4 471 615 A1**
(43) Date of publication of application: **04.12.2024**
(21) Application number: 24179281.1
(22) Date of filing: 31.05.2024
(51) Int. Cl.: G06F 16/242, G06F 16/2452

(54) **STRUCTURING AND RICH DEBUGGING OF INPUTS AND OUTPUTS TO LARGE LANGUAGE MODELS**

(30) Priority: 31.05.2023 US 202363505224 P; 31.05.2023 US 202363505216 P; 15.08.2023 US 202363519789 P; 15.08.2023 US 202363519800 P; 28.05.2024 US 202418676141
(71) Applicant: Palantir Technologies Inc., Denver, CO 80202 (US)
(72) Inventor: HAWES, Matthew, Denver, 80202 (US); SHANKAR, Ankit, Denver, 80202 (US); TELLING, Morten, Denver, 80202 (US); DOBSON, Jack, Denver, 80202 (US); MAJID, Adil, Denver, 80202 (US)
(74) Representative: Jolliffe, Jack Louis

(57) **Abstract**

The disclosure is directed to methods and systems for improving interactions with a Large Language Model (LLM). An artificial intelligence system (AIS) can receive user inputs via a graphical user interface indicating a task to be performed by the LLM, one or more tools which may be accessed by the AIS in response to tool calls from the LLM, and an output schema for structuring a format of a response from the LLM. The AIS can generate a prompt for the LLM based on the user input. The prompt can include indications of the one or more tools, one or more example tool operations, the task to be performed, and an indication of the output schema. The AIS can include a debugging application or module enabling rich debugging of language model interactions in a single view.

## Description

### FIELD

Implementations of the present disclosure relate to systems and techniques for improving user interactions with computer-based models. More specifically, implementations of the present disclosure relate to computerized systems and techniques that improve user interactions with large language models ("LLMs") through analysis, updating, supplementing, summarizing, etc. natural language prompts from users, as well as responses from the LLMs.

### BACKGROUND

Large language models are opaque, imprecise, and inconsistent in their replies, which make them good conversationalists but also difficult to debug when they are expected to perform consistently. Further, complex calls to an LLM can involve multiple back-and-forth responses, where previous responses may be used in downstream prompts, which may further complicate the consistency and predictability of results.

### SUMMARY

The systems, methods, and devices described herein each have several aspects. Without limiting the scope of this disclosure, several non-limiting features will now be described briefly. Generally described, the present disclosure relates to systems and techniques that improve the execution of computing processes using LLMs through analysis, updating, supplementing, summarizing, etc. of natural language prompts, as well as responses from the LLMs. Some implementations of the present disclosure relate to computerized systems and techniques for chaining language models with other types of functions.

Prompting a Large Language Model (LLM) to generate useful responses may be difficult with existing techniques and systems. Existing LLM systems may only be capable of receiving or outputting data as strings. Thus, prompt engineering with existing LLM systems often requires constructing lengthy natural language input which may be difficult and time-consuming, especially for complex prompts. Moreover, existing LLM systems often return undesirable responses due, in part, to the difficulties of constructing useful prompts. Additionally, existing LLM systems often generate responses in a format that may not be suitable for subsequent use such as in various data functions or operations.

An improved artificial intelligence system (or simply "system") facilitates generating LLM prompts that can increase the usefulness (e.g., accuracy, relevance, effectiveness, etc.) of LLM responses. The system can provide an input form, including various data fields, to a user into which the user may input information relating to a prompt. The input information can include a requested task for the LLM to perform, system tools the LLM may use in performing the task, and/or system data the LLM may query in performing the task. A task can include an operation for the LLM to perform such as data-related operations including data queries, data processing, or data manipulation. One example task can include "scheduling maintenance for the oldest piece of equipment".

The system can augment the user's input with additional information which can reduce the burden of prompt engineering on the user and increase the effectiveness of the prompt in inducing the LLM to generate a useful response. The additional information can be based on the user's input. The additional information may describe to the LLM various system tools that the LLM can use to achieve a proper response. The additional information may describe to the LLM data that is accessible by the system, including how the data is structured or formatted within an ontology. Thus, the LLM output may include text that is a properly formatted for execution by the system (e.g.., by a plugin that accesses external data sources) without further processing. The additional information may include examples of how the LLM may use the various system tools and/or data when responding to the user's requested task.

The system can interact with an ontology, such as may be represented in a database. The system can parse an output of the LLM to generate queries to the database. The system can perform one or more operations on data of the database based on an output of the LLM, such as text included in an output of the LLM in a prescribed format indicated in the prompt. The system can generate an input to the LLM (e.g., a subsequent prompt) based on the one or more operations, such as information obtained from querying a database, which may facilitate the LLM performing the user requested task. This subsequent prompt to the LLM may include the conversation history, as well as the information obtained from querying the database.

The system can structure an output of the LLM. The system may provide pre-configured output schemas for selection by a user. The user can customize and select the schemas based on their individual needs. The system can reformat an LLM output to a different data type. The system can assign variables to LLM outputs. The system may access the variables for subsequent use such as in other LLM input prompts. The system is able to generate structured queries to database systems based on user inputs and a schema prescribing a format for queries to be generated. This allows accurate and efficient data retrieval based while allowing flexibility of the structure user inputs defining a task to be performed.

The system can display a debug panel that allows the user to view various portions of information associated with interactions between the user, the LLM, and/or external data services. For example, the debug panel can show the prompt provided to the LLM. The prompt can include the user input and the additional information provided by the system to augment the user's input. The system can display to the user one or more outputs of the LLM while performing the user-requested task. The system can display to the user one or more inputs to the LLM while performing the user requested task. The system can display to the user one or more operations performed by the system while performing the user requested task. The user may select to view or hide one or more portions of the prompt, LLM inputs and outputs, or system operations which the system can display.

The system may be configured to enable rich debugging of LLM interactions in a single view (e.g., a single user interface). According to various implementations, the system (and related processes, functionality, and interactive graphical user interfaces) can advantageously provide for rich debugging of an LLM prompt by exposing interactions with the LLM, allowing for granular prompt modification, and enabling testing interactions with the LLM. The system may further advantageously allow multiple "calls" to the LLM (e.g., sequential or nested back-and-forth prompts and messages) to be viewed and examined in a single user interface.

Disclosed herein is an artificial intelligence system that enables users to debug LLMs with a rich view. For example, a user interface may include a user interface showing detailed, segmented logs of all (or some subset of historical) inputs and outputs from the LLM. In the case of historical logs, the system includes security and data privacy measures to ensure that private or confidential electronic data assets are not inadvertently revealed.

Further, the user can select any prompt or response from the LLM and modify it, such as in a current prompt that the user is developing. As another example, the system may enable a user to select certain "tools" (e.g., to access various data processing services) to include into a prompt; the system may then automatically edit the prompt to instruct the LLM to, for example, query or access the selected tool. For example, in some implementations, the system may enable a user to "hard code" LLM prompts by manually editing or adding to a LLM prompt, such as through a text box or the like. The system may also enable a user to provide indications of a modification (e.g., by providing a description of the necessary changes or by entering or editing information via a user interface), and the system may automatically generate a modified LLM prompt. Advantageously, such editing enables the user to test different scenarios and more accurately identify which aspects of the system are working as expected, as well as which aspects can be improved. For example, a user may discover through testing that the system's prompt generation module has errors.

Further, often an LLM will call another LLM, resulting in a "nested" interaction history. As discussed herein, the system may enable the user to view not only interactions with the top-level LLM, but also the nested LLM calls (including the interaction history or "logs" of communications of those nested LLM calls), and to edit and execute those portions of the interaction history as well. For example, in some embodiments, if a first LLM queries a second LLM (or sends a second prompt to the same LLM), the system may display conversation history that includes: 1) an initial prompt provided to the first LLM; 2) an output from the first LLM that is provided as a second prompt to the second LLM; 3) a first response from the second LLM to the second prompt from the first LLM; and 4) a second response from the first LLM. The system may then enable a user to, for example, edit the initial prompt provided to the first LLM and execute the nested execution (e.g., the call to the second LLM) with the edited initial prompt, and this process may be repeated multiple times to test variations in the first prompt, for example, without requiring re-execution of all of the nested calls. The system may enable the user to do this within a single view, such as in a user interface displayed to the user.

Further, as described above, the system may enable an LLM to query or otherwise utilize certain "tools," enabling access to various data processing services. In some embodiments, if a tool is utilized by the system, the system may display logs associated with the utilized tool. For example, the system may display inputs to and outputs from the utilized tool, which may be stored as part of the conversation history also. Similarly, in some embodiments, the system may display logs associated with particular functions or formulas that may be accessed by an LLM.

In some embodiments, the LLM responses may be parsed out for relevant information, including information that indicates a format other than natural language. For example, advantageously, the system can interpret the LLMs requests to "tools" (in the form of "tool calls" included in an LLM response) and show a more user-friendly version of what the LLM has output. For example, if an output from the LLM includes tool call for querying some structured data/business objects (e.g., ontology objects), instead of showing the plain text output (of the tool call), the system may display a visualization, such as a rendered version of the query (and/or responses) cast into terms the user would understand, along with a link to view the data objects. In some implementations, such a visualization may comprise infographics (such as graphs, logs, pictures, etc.) and text (e.g., rich-text, links, etc.). As another example, if an LLM response includes a tool call to a tool for generating a graph, the system may execute a call to the associated data processing service (or "tool"), receive the graph in response to the call, and then display the generated graph, without displaying the plain-text query included in the LLM response.

In some embodiments, the system may enable a user to set "breakpoints" within an interaction history (such as a series of prompts to and responses from an LLM). For example, given a series of prompts to and responses from an LLM, the system may enable a user to identify a point to stop or pause execution. In some embodiments, the system may enable a user to set conditional breakpoints, wherein execution is stopped upon some condition being met (e.g., when a specific tool is invoked). Similarly, the system may enable a user to set a "startpoint" or "stoppoint." For example, given a series of prompts to and responses from an LLM, the system may enable a user to identify a point to start execution (e.g., start at the third prompt to the LLM instead of re-starting from the beginning of the interaction).

Various embodiments of the present disclosure provide improvements to various technologies and technological fields. For example, as described above, various embodiments of the present disclosure may advantageously improve the performance and accuracy of an artificial intelligence system enabling users to debug interactions within the system.

Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with, and presentation of, various types of electronic data.

Various combinations of the above and below recited features, embodiments, and aspects are also disclosed and contemplated by the present disclosure. Additional embodiments of the disclosure are described below in reference to the appended claims, which may serve as an additional summary of the disclosure.

In various implementations, systems and/or computer systems are disclosed that comprise a computer-readable storage medium having program instructions embodied therewith, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising a computer-readable storage medium are disclosed, wherein the computer-readable storage medium has program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings.
FIG. 1A is a block diagram illustrating an example Artificial Intelligence System (or "AIS") in communication with various devices.
FIG. 1B is a flowchart illustrating an example process for interacting with an LLM.
FIG. 2 is a block diagram of an example implementation of a graph-based visualization system.
FIGS. 3-5 illustrate example user interfaces associated with an artificial intelligence system for interacting with an LLM.
FIG. 6 is a flowchart illustrating an example process for generating an LLM prompt.
Figures 7A and 7B are flowcharts illustrating example methods for debugging LLMs according to various embodiments.
Figures 8 and 9 illustrate example user interfaces showing an example rich debugger according to various embodiments.
FIG. 10 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term **"model,"** as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like.

A **Language Model** is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A **Large Language Model ("LLM")** is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality. LLMs can be extremely useful for natural language processing, including receiving natural language prompts and providing natural language responses based on the text on which the model is trained. LLMs may not be data security- or data permissions-aware, because they generally do not retain permissions information associated with the text upon which they are trained. Thus, responses provided by LLMs may be limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

**Data Processing Service (or "Service" or "Plug-in"):** receives and responds to requests for data and/or data processing. A Plug-in may be accessible via an API that is exposed to an Artificial Intelligence System (and/or other remote systems) and allows data processing requests to be received via API calls from those systems (e.g., an AIS). A few examples of **services** or **plug-ins** include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other data retrieval, processing, and/or analysis function.

**Prompt (or "Natural Language Prompt" or "Model Input"):** a term, phrase, question, and/or statement written in a human language (e.g., English, Chinese, Spanish, etc.) that serves as a starting point for a language model and/or other language processing. A prompt may include only a user input or may be generated based on a user input, such as by a prompt generation module (e.g., of an artificial intelligence system) that supplements a user input with instructions, examples, and/or information that may improve the effectiveness (e.g., accuracy and/or relevance) of an output from the language model. A prompt may be provided to an LLM which the LLM can use to generate a response (or "model output").

**User Input (or "Natural Language Input"):** a term, phrase, question, and/or statement written in a human language (e.g., English, Chinese, Spanish, etc.) that is provided by a user, such as via a keyboard, mouse, touchscreen, voice recognition, and/or other input device. User input can include a task to be performed, such as by an LLM, in whole or in part. User input can include a request for data, such as data accessed and/or processed by one or more services. User input can indicate one or more tools associated with the user request or task which may facilitate performing the task. User input can indicate one or more data object types associated with a tool. User input can indicate one or more actions associated with a tool. User input can include a user selection of a format for a response from an LLM. User input can include a user-defined variable to which a response may be saved.

**Context:** any information associated with user inputs, prompts, responses, etc. that are generated and/or communicated to/from the user, the artificial intelligence system, the LLM, the data processing services, and/or any other device or system. For example, context may include a conversation history of all of the user inputs, prompts, and responses of a user session. Context may be provided to an LLM to help an LLM understand the meaning of and/or to process a prompt, such as a specific piece of text within a prompt. Context can include information associated with a user, user session, or some other characteristic, which may be stored and/or managed by a context module. Context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

A context module may provide all or only a relevant portion of context to a selection module for use in selecting one or more plug-ins and/or service orchestrators (e.g., configured to generate requests to plug-ins) for use in generating a properly formatted service request. Context can include tool information. Context can include tool implementation examples. In some embodiments, context may include identification of services and parameters of prior operations, but not underlying data that was accessed or retrieved by the service (e.g., use of graph visualization service and graph parameters without indicating the data illustrated in the graph). In some embodiments, context may include some or all of the underlying data accessed or retrieved by the service.

A **Tool** can include a set of logic or rules that can be provided to an LLM that the LLM can use to obtain additional information, such as by generating a request for access to additional data via a plug-in. Thus, a tool can be used by an LLM to generate requests (that may be fulfilled by the AIS) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology and/or a user.

**Tool Information** can include information associated with a tool that is provided to an LLM and is usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context.

**Ontology:** stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types.

**Data Object (or "Object"):** a data container for information representing a specific thing in the world that has a number of definable properties. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth.

An **Object Type** is a type of a data object (e.g., person, event, document, and/or the like). Object types may be defined by an ontology and may be modified or updated to include additional object types. An object definition (e.g., in an ontology) may include how the object is related to other objects, such as being a sub-object type of another object type (e.g., an agent may be a sub-object type of a person object type), and the properties the object type may have.

### OVERVIEW OF STRUCTURING INPUTS AND OUTPUTS TO AN LLM

As mentioned above, prompting a Large Language Model (LLM) to generate useful responses may be difficult with existing techniques and systems. Existing LLM systems may only be capable of receiving or outputting data as strings. Thus, prompt engineering with existing LLM systems often requires constructing lengthy natural language input which may be difficult and time-consuming, especially for complex prompts. Moreover, existing LLM systems often return undesirable responses due, in part, to the difficulties of constructing useful prompts. Additionally, existing LLM systems often generate responses in a format that may not be suitable for subsequent use such as in various data functions or operations.

An improved artificial intelligence system (or simply "system") facilitates generating LLM prompts that can increase the usefulness (e.g., accuracy, relevance, effectiveness, etc.) of LLM responses. The system can provide an input form, including various data fields, to a user into which the user may input information relating to a prompt. The input information can include a requested task for the LLM to perform, system tools the LLM may use in performing the task, and/or system data the LLM may query in performing the task. A task can include an operation for the LLM to perform such as data-related operations including data queries, data processing, or data manipulation. One example task can include "scheduling maintenance for the oldest piece of equipment".

The system can augment the user's input with additional information which can reduce the burden of prompt engineering on the user and increase the effectiveness of the prompt in inducing the LLM to generate a useful response. The additional information can be based on the user's input. The additional information may describe to the LLM various system tools that the LLM can use to achieve a proper response. The additional information may describe to the LLM data that is accessible by the system, including how the data is structured or formatted within an ontology. Thus, the LLM output may include text that is a properly formatted for execution by the system (e.g.., by a plugin that accesses external data sources) without further processing. The additional information may include examples of how the LLM may use the various system tools and/or data when responding to the user's requested task.

The system can interact with an ontology, such as may be represented in a database. The system can parse an output of the LLM to generate queries to the database. The system can perform one or more operations on data of the database based on an output of the LLM, such as text included in an output of the LLM in a prescribed format indicated in the prompt. The system can generate an input to the LLM (e.g., a subsequent prompt) based on the one or more operations, such as information obtained from querying a database, which may facilitate the LLM performing the user requested task. This subsequent prompt to the LLM may include the conversation history, as well as the information obtained from querying the database.

The system can structure an output of the LLM. The system may provide pre-configured output schemas for selection by a user. The user can customize and select the schemas based on their individual needs. The system can reformat an LLM output to a different data type. The system can assign variables to LLM outputs. The system may access the variables for subsequent use such as in other LLM input prompts.

The system can display a debug panel that allows the user to view various portions of information associated with interactions between the user, the LLM, and/or external data services. For example, the debug panel can show the prompt provided to the LLM. The prompt can include the user input and the additional information provided by the system to augment the user's input. The system can display to the user one or more outputs of the LLM while performing the user requested task. The system can display to the user one or more inputs to the LLM while performing the user-requested task. The system can display to the user one or more operations performed by the system while performing the user requested task. The user may select to view or hide one or more portions of the prompt, LLM inputs and outputs, or system operations which the system can display.

### Example System

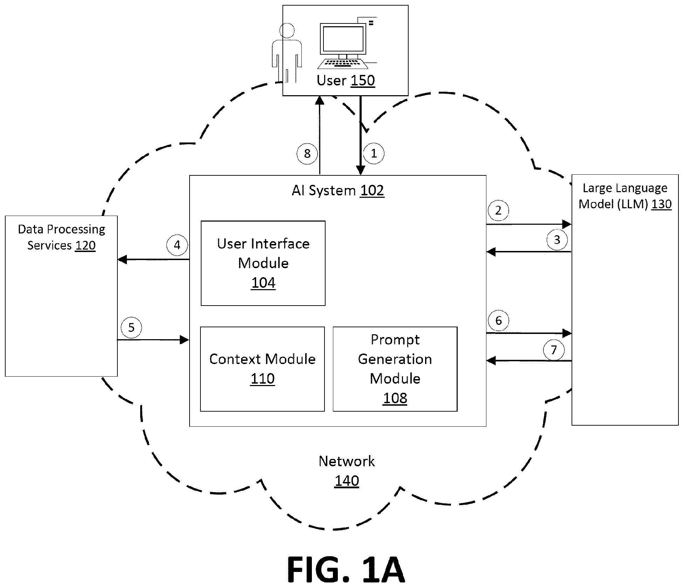

**Figure 1A** is a block diagram illustrating an example **Artificial Intelligence System (or "AIS") 102** in communication with various devices to respond to a user input. In the example of Figure 1A, the Artificial Intelligence System 102 comprises various modules, including a User Interface Module 104, a Prompt Generation Module 108, and a Context Module 110. In other embodiments, the AIS 102 may include fewer or additional components. In some implementations, the Artificial Intelligence System 102 may comprise the user device 150.

In the example of Figure 1A, the various devices are in communication via a network 140, which may include any combination of networks, such as one or more local area network (LAN), personal area network (PAN), wide area network (WAN), the Internet, and/or any other communication network. In some embodiments, modules of the illustrated components, such as User Interface Module 104, Prompt Generation Module 108, and Context Module 110 of the Artificial Intelligence System 102, may communicate via an internal bus and/or via the network 140.

A **user interface module 104** is configured to generate interactive user interface data that may be rendered on a user device 150, such as to receive an initial user input, as well as later user input that may be used to initiate further data processing. In some embodiments, the functionality discussed with reference to the user interface module 104, and/or any other user interface functionality discussed herein, may be performed by a device or service outside of the Artificial Intelligence System 102 and/or the user interface module 104 may be outside the Artificial Intelligence System 102. For example, the user interface module 104 may be comprised, in whole or in part, on the user device 150. Example user interfaces are described in greater detail below.

A **context module 110** is configured to maintain, select, and/or provide some or all relevant context associated with a user input, user session, multiple sessions of the user, and/or other context. The context module 110 may store context for various groups of users, e.g., user inputs from multiple users. The Artificial Intelligence System 102, LLM, and/or other components of the system may make use of context in fulfilling their functions. Context may include, for example, all or part of a conversation history from one or more sessions with the user (e.g., a sequence of user inputs and responses or results), user selections (e.g., via a point and click interface or other graphical user interface), data processing services 120 implemented during the session, user-selected objects and any corresponding properties for those objects, any linked objects as defined by a relevant ontology, and the like. As one example, if a most recent result returned to a user included a filtered set of "flight" objects, and a user types "send an email listing the flights to my manager," the AIS 102 may make use of the context of the filtered set of aircraft objects, as provided by the context module, and include a list of those objects in an email.

In some embodiments, the user interface module 104 may suggest certain actions to the user (e.g., any actions described herein, or any other related actions) based on context provided by context module 110 (e.g., email the account manager of the account that is being displayed).

A **prompt generation module 108** is configured to generate a prompt to a language model, such as LLM 130. As described in further detail below, the prompt generation module 108 may generate a prompt based on data provided by the user interface module 104 (e.g., a user input, tool information, etc.), and/or the context module 110 (e.g., conversation history and/or other contextual information).

In the example of Figure 1A, a user 150 (which generally refers to human user and/or a computing device of any type that may be operated by a human user) may provide a user input to the Artificial Intelligence System 102 indicating a natural language request for some data analysis to be performed. In some embodiments, the user may select one or more object types to limit processing by the AIS 102 to only those selected object types (which may increase speed and relevance of responses provided by the system), while in other embodiments the user may not provide any information except an initial input.

The Artificial Intelligence System 102 may include and/or have access to the LLM 130 and/or other language model, and the LLM may be fine-tuned or trained on appropriate training data (e.g., annotated data showing correct or incorrect pairings of sample natural language queries and responses). After receiving a user input, the Artificial Intelligence System 102 may generate and provide a prompt to the LLM 130, which may include one or more large language models trained to fulfill a modeling objective, such as task completion, text generation, summarization, etc.

In some implementations, the AIS 102 may be capable of interfacing with multiple LLMs. This allows for experimentation and adaptation to different models based on specific use cases or requirements, providing versatility and scalability to the system. In some implementations, the AIS 102 may interface with a second LLM in order to, for example, generate an input to a data processing service 120, or to generate some or all of a natural language prompt (e.g., generate a prompt for the LLM 130).

The Artificial Intelligence System 102 may also communicate with one or more **Data Processing Services 120** in the course of fulfilling a user input and/or a task. The data processing services 120 may include any quantity of services (or "plug-ins") and any available type of service. For example, the services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other services. In some implementations, tool information provided in a prompt to the LLM enables the LLM to return a properly formatted request for further information from a plug-in, such as in the form of an API call to a data processing service. Thus, the LLM 130 may indirectly request (via the AIS 102) for data processing services 120 to perform a specific process. The output from the data processing service 120 may then be provided back to the LLM 130 for further processing of a task and/or to develop a final result to be provided to the user. In some implementations, the data processing services 120 may be a part of the AIS 102 (e.g., as part of a data processing services module of AIS 102). In some implementations, the data processing services 120 may be external to the AIS 102.

Figure 1A includes a set of circles numbered from 1-8 that illustrate an example set of interactions and data that may be exchanged between various devices, such as the user 150, AIS 102, LLM 130, and services 120. In other implementations, the interactions and/or data may be ordered differently. Beginning with interaction 1, the AIS 102 receives a user input from the user device 150. As noted above, the user input can include a term, phrase, question, and/or statement written in a human language (e.g., English, Chinese, Spanish, etc.), a request for data, a task to be performed, information associated with a task to be performed, one or more tools (e.g., a query object tool, an apply action tool, etc.), one or more tool types (e.g., an object type, an action type, etc.), and/or other information.

Next, at interaction 2 the prompt generation module 108 generates a prompt based on at least the user input. The prompt can include the user input and/or may be generated based on other context, such as may be accessed by the context module 110. The prompt can include information associated with one or more tools selected by the user, such as in the form of tool information, which enables the LLM 130 to generate a tool call that can be used by the AIS to communicate with a data processing service. Tool information may indicate, for example, how data that may be accessed by the LLM (via tool calls) is structured, such as in an ontology or other format. Tool information can indicate properties associated with a particular object type, such as an object type selected by the user in the user input at interaction 1. Tool information can include instructions for implementing a tool, instructions for generating a tool call, including instructions for formatting a tool call, tool implementation examples for executing one or more tool operations, and/or other information that may allow the LLM to provide more meaningful responses to the AIS. Tool implementation examples included in an LLM prompt can include pre-defined examples (e.g., the same for each use of the tool), user-selected or user-generated examples, and/or examples that are dynamically configured by the AIS 102 based on context.

Advantageously, supplementing a prompt with context, such as tool information may cause the LLM to generate responses to the prompt that are more useful (e.g., more relevant, accurate, and/or complete). Moreover, implementing AI system 102 to generate prompts, which can include, context, may greatly reduce the burden of prompt design and prompt engineering on a user. Moreover, prompt generation module 108 can generate prompts that are more effective in inducing an LLM to generate useful responses, which may greatly improve the technical field of LLM systems.

Interaction 2 shows the AIS 102 providing a prompt, such as may be generated by prompt generation module 108, to the LLM 130. In response to receiving the prompt, at interaction 3 the LLM 130 provides an output to the AIS 102. The LLM output comprises text that may include a full or partial response to the provided task and/or information indicating additional information that may be requested by the AIS 102. For example, the LLM output can include a tool call formatted according to instructions in tool information includes in prompt. In some implementations, the AIS 102 can parse the LLM output to change a format of data of the LLM output. For example, the AIS 102 may convert a text string of the LLM output to a different data format, such as a data object format that is defined by an ontology. The AIS 102 may convert an LLM output to a data format that is compatible with data processing services 120. Advantageously, reformatting data output from an LLM, such as from one data type to another, may improve the technical field of computing processes using integrated LLMs such as by providing a system to facilitate integrating the LLM with a data processing service, which may greatly expand or enhance the capabilities of computing systems that leverage the functionality of LLMs. The AIS 102 may receive user inputs describing tasks in a variety of different formats. Information provided to the LLM indicating a particular data format allows the user inputs to be restructured to achieved improved functionality when interacting with tools and data processing services.

If the output from the LLM at interaction 3 includes a tool call, the AIS 102 can generate a request to a data processing service 120 at interaction 4. The request can include the tool call text directly from the LLM output and/or some or all of the tool call text reformatted to be usable by the particular data processing service. The AIS 102 can communicate with the data processing services 120 via one or more API calls, HTTP requests, or the like.

In response to the request, the data processing service 120 can generate data output at interaction 5. For example, the data processing service output may be generated based on implementation of the tool call received at interaction 4. The data output may be formatted according to a structure specified by the data processing service 120, such as according to an ontology. For example, the data output may identify a data object having one or more properties and which can be formatted according to an ontology. Data output may be in various formats, some of which may not be recognizable by the LLM 130 (e.g., non-textual data).

In some examples, the AIS 102 can reformat the data output from the data processing service 120, such as to reformat a data object as a text string. The AIS 102 may parse the data output and extract one or more properties of the data object to be formatted as a string that may be provided to the LLM 130 to accurately "understand" and process data of the data output. Advantageously, the AIS 102 may greatly improve the technical field of computing processes using integrated LLMs such as by providing a system to facilitate integrating the LLM with data from various sources having various data types which may greatly expand or enhance the capabilities of computing systems that leverage the functionality of LLMs. By reformatting structured data into a text string, the functionality of LLMs train using text-based training data can be applied to structured data outputs from a data processing service 102.

Next, at interaction 6 the prompt generation module 108 can generate a subsequent prompt based on at least the data output from the data processing service. The subsequent prompt can include some or all of the data output (e.g., reformatted as a string), along with relevant context, such as context provided, generated, and/or accessed by context module 110. Thus, the subsequent prompt can include some or all of the initial prompt (interaction 2) and/or the LLM output (interaction 3). In some examples, a summary of the conversation history is provided in the subsequent prompt, rather than including the full text of the conversation history.

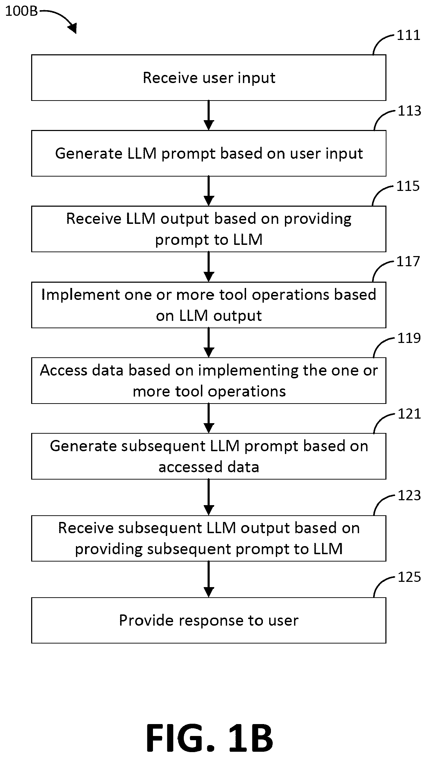

In response to receiving the subsequent prompt, the LLM 130 may generate a subsequent LLM output at interaction 7. The subsequent LLM output may include various information, similar to the first output received at interaction 3. For example, the subsequent LLM output may include a final response to the task, another tool call, and/or other information. In the example of Figure 1, the subsequent prompt includes a final response, and does not include another tool call. The processes illustrated as interactions 2-6 may be repeated any number of times as the LLM makes additional tool calls to obtain further information and the data processing services outputs are provided back to the LLM.

At interaction 8 the AIS 102 generates a final response that is to provide to the user 150. The final response may include some or all of the subsequent LLM output and/or other information. The final response may be formatted according to a user selection, such as a string of text or data object (or link to data object stored in an ontology). A data object may be identified with a unique identifier associated with an object. The final response may include text, images, maps, interactive graphical user interfaces, datasets, database items, audio, actions, or other types or formats of information. In some implementations, the AIS 102 may modify the LLM output to generate the final response provided to the user. For example, the AIS 102 can parse the subsequent LLM output to change a format of data for inclusion in the final response. In some implementations, the AIS 102 may save the final response as a variable, which may be subsequently provided to the LLM.

Advantageously, the AIS 102 may improve the technical field of LLMs such as by improving the usefulness of LLM responses. LLM 130 may only output data having a certain format (e.g., data formatted as a string). Formatting the data output from the LLM may allow the LLM 130 to provide data that can be more useful to a user, such as if a user requires data in a non-string format such as for subsequent manipulation, functions, or processes.

As shown and/or described, AIS 102 can generate a response to a user input by interacting with LLM 130 and/or with data processing services 120. The AIS 102 can receive data from, and/or provide data to, the LLM 130 and/or data processing services 120. In some implementations, the AIS 102 may interact with the LLM 130 more or less than what is illustrated in Figure 1A, such as to generate a response for a given user input (and associated task or sub-task). In some implementations, the AIS 102 may interact with the data processing services 120 more or less than what is illustrated in Figure 1A, such as to generate a response for a given user input (and associated task or sub-task). In some implementations, the AIS 102 may interact with the data processing services 120 in response to every output from the LLM 130 (except for a final LLM output). In some implementations, the AIS 102 may interact with the LLM 130 in response to every output from the data processing services 120. The number of times the AIS 102 interacts with the LLM 130 and/or with the data processing services 120 may depend on at least the initial user input.

**Figure 1B** is a flowchart illustrating an example process 100B for interacting with an LLM. This process, in full or parts, can be executed by one or more hardware processors, whether they're associated with a singular or multiple computing devices like user device 150, AIS 102, data processing services 120, LLM 130, and even devices in remote or wireless communication. The implementation may vary. For example, it could be controlled by processors related to an AIS, such as AIS 102, or can involve modifications like omitting blocks, adding blocks, and/or rearranging the order of execution of the blocks. Process 100B serves as an example and isn't intended to restrict the present disclosure.

At block 111, an artificial intelligence system ("AIS"), such as AIS 102 shown and/or described herein, can receive a user input. The user input can include various items of information and be received based on multiple input modalities. For example, user input may indicate one or more of:
- one or more tasks for an LLM to perform.
- one or more tools associated with performing the task.
- one or more data object types associated with a tool.
- one or more actions associated with a selected tool.
- a format for a response from the LLM.
- a user-defined variable to which an LLM response may be saved.

The AIS can receive the user input via a user interface of a computing device.

At block 113, the AIS can generate a prompt for an LLM, such as based on the user input. For example, user input may be used by the AIS to identify text content to include in an LLM prompt, such as tool information associated with a tool selected by the user input. The prompt can include a natural language prompt. The AIS can generate the prompt based on at least the user input. The prompt can include context. The prompt can include tool information associated with one or more tools selected by the user. The prompt can include one or more tool implementation examples. The AIS can provide the prompt to the LLM.

At block 115, the AIS can receive an LLM output. The AIS can receive the LLM output in response to providing the prompt to the LLM. For example, an LLM may process the prompt and generate a response to the prompt which the AIS can receive as the LLM output. The LLM output can include a string of text. The LLM output can include a tool call configured to cause a data processing service to perform one or more tool operations, such as in response to the AIS providing the tool call to the data processing service. In some implementations, the LLM output can comprise a tool call configured to perform a database query. The tool call can be formatted according to tool information included in a prompt generated by the AIS and provided to the LLM.

The AIS can parse the LLM output to change a format of data of the LLM output. The AIS may convert a string of the LLM output to a different data format. In some implementations, the AIS may convert an LLM output data format to a data format defined by an ontology, such as a data object format. The AIS may convert an LLM output, such as text of a tool call including in the LLM output, to a data format that is compatible with a data processing service. Advantageously, reformatting data output from an LLM, such as from one data type to another, may improve the technical field of LLMs such as by providing a system to facilitate integrating the LLM with a data processing service which may greatly expand or enhance the capabilities of LLMs.

At block 117, the AIS can implement one or more tool operations based on the LLM output. For example, the LLM output may comprise a tool call which may cause the AIS to perform one or more tool operations associated with the tool call. In some implementations, the AIS may query a database based on a tool call in the LLM output. In some implementations, the AIS may process data based on the LLM output, such as filtering and/or aggregating data. In some implementations, the AIS may cause a data processing services to query a database based on the LLM output (e.g., by sending the tool call included in the LLM output to the data processing service via an API call). The database may be external and/or remote to the AIS. The database may be comprised within a same system or device as the AIS.

At block 119, the AIS may access data based on implementing one or more tool operations, such as data that is returned from a data processing service in response to a tool call sent from the AIS. Thus, accessing the data can include receiving the data from a data processing services. Accessing the data can include retrieving the data from a database. The data can include data structured according to an ontology. The data can include a data object having a data object type and one or more properties.

At block 121, the AIS may generate a subsequent LLM prompt. The subsequent LLM prompt may comprise the data, or portions thereof, accessed at block 119 (e.g., an output from a data processing service that was called based on a tool call included in the initial LLM response). The subsequent LLM prompt can include context such as some or all of conversation history, such as some or all of the LLM prompt generated at block 113 and/or the LLM output at block 115. In some implementations, the AIS can generate the subsequent LLM prompt based on reformatting the data accessed at block 119. For example, data accessed at block 119 may comprise a data object having one or more properties that are formatted according to an ontology. The AIS may reformat the data (e.g., the data object) as a text string that is more easily understandable by the LLM. The AIS may parse the data and extract one or more properties of the data to be formatted as a string. The AIS can provide the subsequent LLM prompt to the LLM.

At block 123, the AIS can receive a subsequent LLM output. The AIS can receive the subsequent LLM output in response to providing the subsequent prompt to the LLM. For example, an LLM may process the subsequent prompt and generate a response to the subsequent prompt which the AIS can receive as the subsequent LLM output. The subsequent LLM output can include a string of text. The subsequent LLM output can include a response to the user input. In some implementations, the LLM output may not include a tool call. In some implementations, The LLM output can include an additional tool call, which may be executed by the AIS in the same manner as discussed above with reference to blocks 117-119.

At block 125, the AIS can provide a response to the user. The response may include and/or be based on the subsequent LLM output. The AIS may generate the response based on reformatting the LLM output. The AIS can parse the subsequent LLM output to change a format of data of the subsequent LLM output. The AIS may convert a string of the subsequent LLM output to a different data format. In some implementations, the AIS may convert a subsequent LLM output data format to a data format defined by an ontology, such as a data object format, which may be linked to a separate software application for viewing information regarding the data object. The AIS may convert an LLM output to a data format that is compatible with a data processing service. The AIS may convert an LLM output to a data format that is selected by a user. Parsing the subsequent LLM output may improve the usefulness of the subsequent LLM output, such as by rendering the output compatible with a data processing service and/or with a user's purposes to facilitate further manipulating and/or processing the data. Advantageously, reformatting data output from an LLM, such as from one data type to another, may improve the technical field of LLMs such as by providing a system to improve the usefulness of LLM outputs.

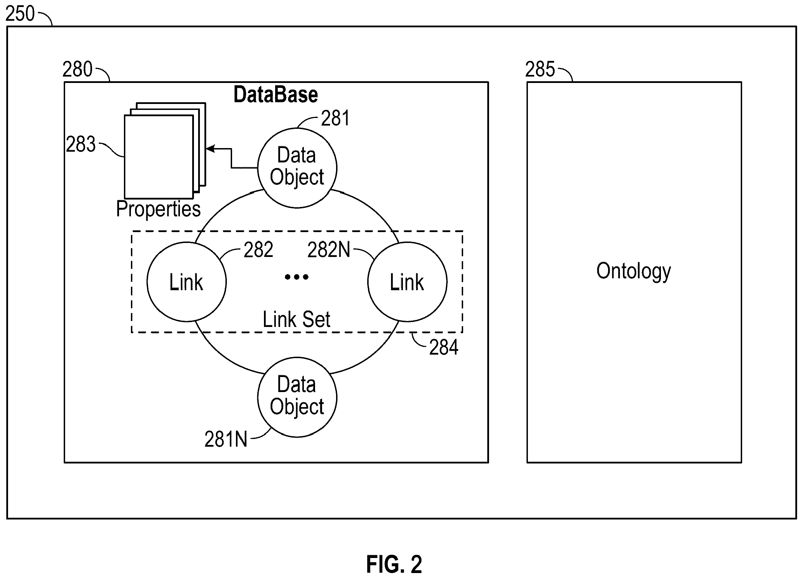

**Figure 2** illustrates an object-centric conceptual data model according to an implementation of an example graph-based visualization system 250 using an ontology 285. This description is provided for the purpose of providing an example and is not intended to limit the techniques to the example data model, the example database system, or the example database system's use of an ontology to represent information. In some implementations, the ontology 285 may be the object ontology 256 of the graph-based visualization system 250.

In one implementation, a body of data is conceptually structured according to an object-centric data model represented by the ontology 285. The conceptual data model is independent of any particular database used for durably storing one or more database(s) 280 based on the ontology 285. For example, each object of the conceptual data model may correspond to one or more rows in a relational database or an entry in Lightweight Directory Access Protocol (LDAP) database, or any combination of one or more databases. In some implementations, the database 280 may comprise one or more of the log data 258, data objects 260, and/or the process data 262.

An ontology 285, as noted above, may include stored information providing a data model for storage of data in the database 280. The ontology 285 may be defined by one or more object types, which may each be associated with one or more property types. At the highest level of abstraction, data object 281 is a container for information representing things in the world. In some examples, data object 281 may be a data object of the data objects 260. For example, data object 281 can represent an entity such as a person, a place, an organization, a market instrument, or other noun. Data object 281 can represent an event that happens at a point in time or for a duration. Data object 281 can represent a document or other unstructured data source such as an e-mail message, a news report, or a written paper or article. Each data object 281 is associated with a unique identifier that uniquely identifies the data object within the database system.

Different types of data objects may have different property types. For example, a "Person" data object might have an "Eye Color" property type and an "Event" data object might have a "Date" property type. Each property 283 as represented by data in the graph-based visualization system 250 may have a property type defined by the ontology 285 used by the database 280.

Objects may be instantiated in the database 280 in accordance with the corresponding object definition for the particular object in the ontology 285. For example, a specific monetary payment (e.g., an object of type "event") of US$30.00 (e.g., a property of type "currency") taking place on 3/27/2009 (e.g., a property of type "date") may be stored in the database 280 as an event object with associated currency and date properties as defined within the ontology 285. The data objects defined in the ontology 285 may support property multiplicity. In particular, a data object 281 may be allowed to have more than one property 283 of the same property type. For example, a "Person" data object might have multiple "Address" properties or multiple "Name" properties.

Each link 282 represents a connection between two data objects 281. In one implementation, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of" relationship to "Person" data object A), a "Kin Of' symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just some examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document.

Each data object 281 can have multiple links with another data object 281 to form a link set 284. For example, two "Person" data objects representing a husband and a wife could be linked through a "Spouse Of" relationship, a matching "Address" property, and one or more matching "Event" properties (e.g., a wedding). Each link 282 as represented by data in a database may have a link type defined by the database ontology used by the database.

### Example User Interfaces

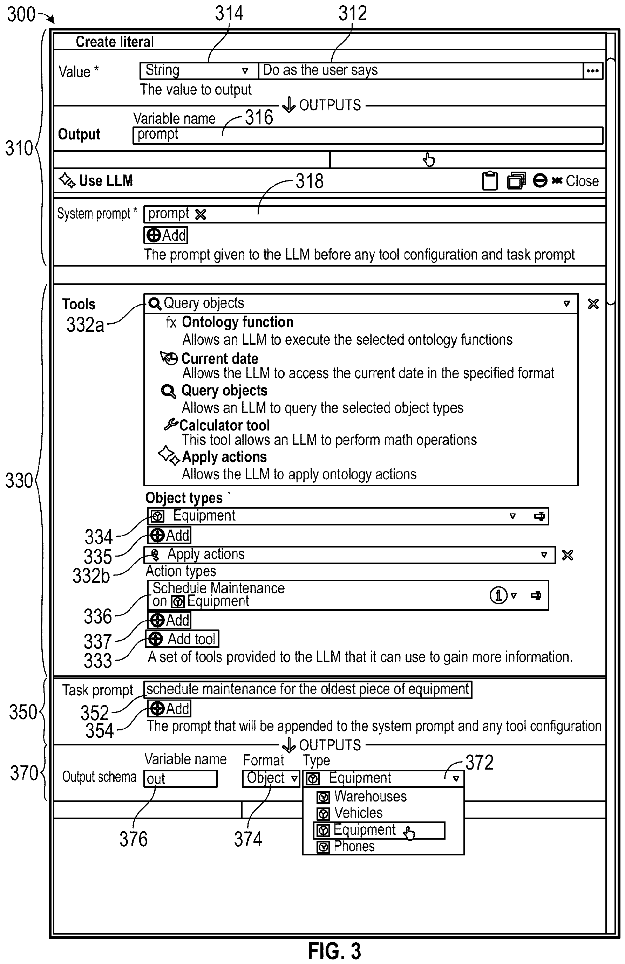

**Figure 3** illustrates an example user interface 300. The user interface 300 may be an interactive graphical user interface. The user interface 300 may be displayed by a computing device, such as user device 150 or AI system 150 of Figure 1, which may comprise a computer, laptop, mobile device, tablet, phone, or the like. User interface 300 can receive one or more user inputs. User interface 300 can facilitate a user interacting with an LLM. User interface 300 can facilitate generating a prompt for an LLM to cause the LLM to generate a useful response. User interface 300 can improve LLM workflows. In some implementations, the user device 150 may receive user input via user interface 300, which may then allow the user device 150 and/or AIS 102 to perform one or more operations based on the user input, such as generating an LLM prompt.

User interface 300 can include a system prompt pane 310, a tool pane 330, a task prompt pane 350, and an output schema pane 370.

System prompt pane 310 can include a value input field 312, a value format field 314, an output field 316, and a system prompt field 318. Value input field 312 can receive a user input, such as "do as the user says", as shown in this example. A user can format a value entered via value input field 312 by selecting a format via value format field 314. Value format field 314 can comprise a drop-down menu displaying one or more options such as "string" or "object". In this example, a user has selected to format the value of value input field 312 as a string.

A device or system may store a value entered via the value input field 312 as a variable. The device or system may store the variable in memory associated with an AIS. The AIS may access the variable to provide to an LLM. Output field 316 can receive a user input indicating a variable name as which to save a value entered via value input field 312. In this example, a user has entered "prompt" via the output field 316 as the variable name to save the value inputted via value input field 312. Advantageously, an AIS can receive variables via system prompt field 318. In some implementations, a variable may reference data. Providing a variable to the AIS may be easier than providing data referenced by the variable (particularly where the variable references large amounts of data). Accordingly, a user can pass large amounts of data to the AIS (and subsequently to an LLM) by simply inputting a variable via system prompt field 318. The AIS can generate an LLM prompt based on the variable provided via system prompt field 318. The AIS can provide context for the variable, including what the variable is and how to use it.

System prompt field 318 can receive a system prompt, which is part of the prompt provided to the LLM and is typically included prior to information in the prompt about any tool or task information. The device or system can provide the system prompt to an LLM. System prompt field 318 can receive a variable stored in memory. System prompt field 318 can receive a variable previously stored using value input field 312, value format field 314, and/or output field 316. In the example of Figure 3, the system prompt field 318 includes the variable Prompt, which is the variable assigned in input box 312 and named in box 316. A user may enter a system prompt via system prompt field 318. The system prompt field 318 may autocomplete variable names of variables that are stored as the user enters characters into the system prompt field 318.

Tool pane 330 can include one or more tool input fields 332, such as tool input field 332a and an action type input field 332b. Tool pane 330 can include one or more object type input fields 334 and one or more action type input fields 336.

A user can configure one or more tools via tool pane 330. A device or system can generate a prompt based on at least tool(s) inputted by a user via tool pane 330. The prompt can include information associated with the tool(s), such as text that allows the LLM to generate tool calls that are usable to obtain further information associated with the task. The device or system can provide the prompt (including tool information) to an LLM which can implement the tool(s) selected by the user via tool pane 330 such as by generating a tool call for an AIS to execute. A user can select or enter one or more tools via tool input fields 332. In this example, a user has selected a query object tool via tool input field 332a and an apply action tool via tool input field 332b. A user may add additional tools via tool pane 330 such as by selecting the add tool selector 333.

Tool input fields 332 may comprise a drop-down menu. A user may visualize a list of available tools via a drop-down menu of tool input fields 332. As shown, in response to selecting tool input field 332a, tool input field 332a displays a drop-down menu of available tools from which a user may select a tool. Tools available for input via tool input fields 332 can include an ontology function tool, a date/time tool, a query objects tool, a calculator tool, an apply action tool, and/or any other tool. The example tools shown and/or discussed herein are not intended to be limiting of the present disclosure. An ontology function tool can allow an LLM, to execute one or more functions associated with an ontology. A user may select the ontology functions, such as via the tool pane 330. A date/time tool can allow an LLM to access the current date, such as according to a specified format. A user can select the format, such as via tool pane 330. A query objects tool can allow an LLM to query selected object types. A user can select object types, such as via the tool pane 330. A calculator tool can allow an LLM to perform mathematical operations. An apply actions tool can allow an LLM to apply one or more actions associated with an ontology. A user may select the one or more actions, such as via the tool pane 330.

In response to selecting a query object tool via tool input field 332a, the tool pane 330 may automatically display an object type input field 334. Object type input field 334 can comprise a drop-down menu of various object types. A user may input or select an object type via object type input field 334 that is associated with the query object tool. A device or system, such as an AIS, may implement a query object tool on the one or more object types selected by a user such as via object type input field 334. For example, an AIS may query the one or more object types selected by a user such as in response to a request from an LLM to implement the query objects tool. A user may input or select additional object types associated with the query object tool such as by selecting the add object type selector 335. In some implementations, a user may input or select a plurality of object types associated with the query object tool. In this example, a user has selected an equipment object type via object type input field 334, which is not intended to be limiting of the present disclosure.

In some implementations, such as in response to a user selecting an ontology function tool via the tool input field 332a, the tool pane 330 may automatically display a function input field (such as rather than object type input field 334). In some implementations, such as in response to a user selecting a date/time tool via the tool input field 332a, the tool pane 330 may automatically display a format input field (such as rather than object type input field 334) for formatting a date and/or time.

In response to selecting an apply action tool via tool input field 332b, the tool pane 330 may automatically display an action type input field 336. Action type input field 336 can comprise a drop-down menu of various object types. A user may input or select an action type via action type input field 336 that is associated with the apply action tool. A device or system, such as an AIS, may implement an apply action tool, such as by applying the one or more action types selected by a user such as via action type input field 336. For example, an AIS may apply an action selected by a user such as in response to a request from an LLM to apply the action. For example, in response to tool information regarding an action that is included in an LLM prompt, The LLM may output text indicating an action call (e.g., a type of "tool call") that is to be initiated by the AIS. For example, an action call may be text that can be directly (and/or after modification) transmitted to another software application or system to perform a task. In some implementations, an AIS may apply an action according to an object type selected by a user via object type input field 334. For example, an AIS may apply an action to an object having an object type selected by the user via object type input field 334. A user may input or select additional action types associated with the apply action tool such as by selecting the add action type selector 337. In some implementations, a user may input or select a plurality of action types associated with the apply action tool. In this example, a user has selected a schedule maintenance action type via action type input field 336, which is not intended to be limiting of the present disclosure.

As shown, a user may manually configure tool(s) associated with a task, request, or prompt to be provided to an LLM. For example, a user may select one or more tools and/or may select one or more types or formats associated with the selected tools, such as an object type, an action type, an ontology function, a date format, or the like. In some implementations, a device or system, such as an AIS, may automatically configure one or more tool(s) based on one or more user inputs, such as task prompt input. For example, an AIS and/or LLM may determine one or more tools needed to perform a task requested by a user and/or may automatically selected one or more types or formats associated with the selected tools.

Task prompt pane 350 can include a task input field 352. A user may enter a task prompt (also referred to herein as a task) via task input field 352, which may be included in the prompt to the LLM after the tool information. The task prompt may represent a request from a user for an LLM to perform a task. In this example, a user has inputted "schedule maintenance for the oldest piece of equipment" as the task prompt via task input field 352. In some implementations, a user can input additional task prompts such as by selecting the add task selector 354. The device or system can generate a prompt based on at least the task prompt. The device or system can provide the task prompt to an LLM.

Output schema pane 370 can include an output type field 372, an output format field 374, and an output name field 376. A user can configure an LLM output using output pane 370. For example, a user can configure a format of an LLM output. Existing LLMs may output data as a certain format, such as a string. Existing LLMs may lack the ability to output data in various types of formats. In some implementations, an LLM data output format or type may be incompatible with a system or workflow. For example, a system may accept an LLM output as an input to a subsequent data processing services or system processes but the formats may be incompatible. As another example, a user may desire to obtain an output from an LLM in a certain format, such as a non-string format. A user may select a desired data output format via output schema pane 370. A device or system, such as an AIS, can format an output from an LLM such as configured by a user via output schema pane 370. A device or system, such as an AIS, can change an LLM output from one data format or type to another data format or type. Advantageously, the devices, systems, or processes described herein may improve the usefulness of LLM outputs, such as by parsing an LLM output to properly format an output as required or desired by a system or user. Advantageously, the devices, systems, or processes described herein may improve the technical field of LLMs such as by improving the usefulness of LLM responses which can facilitate integrating LLMs with various systems or workflows such as by rendering LLM output compatible with the systems or workflows.

A user can select a data format for an output via output format field 374. In this example, the user has selected object as the data format for an output. A user can select a particular object type for an output via output type field 372. In this example, a user has selected an equipment object type as the data type for an output. In some implementations, a user may select primitive as the data format for an output via output format field 374. In some implementations, output type field 372 may comprise a drop-down menu displaying one or more data types for selection by a user which may include decimal, double, float, integer, long, map, ontology edit, short, string, or the like, which may correspond to a primitive data format.

A user may input a variable name via output name field 376. A device or system, such as an AIS, can store an LLM output as a variable having a variable name selected by a user. A device or system can subsequently use the variable in or more processes, operations, or workflows, including providing the variable to an LLM. A variable may serve as a reference to underlying data. As an example, an LLM may output a query configured to access large amounts of data and an AIS can store that outputted query as a variable. Advantageously, storing the LLM output as a variable can allow for rapidly passing the variable between workflows or processes and/or providing to a user, without having to also pass the underlying data (which may be very large in size). For example, accessing underlying data stored as or reference by a variable may require long processing times and/or may not be practical such as when displaying the data to a user at least because of the size of the data. In some implementations, an AIS can access a variable to provide to an LLM along with context explaining what the variable is or how to use the variable, etc. As an example, variable "out" can by input to system prompt field 318 as part of an LLM prompt.

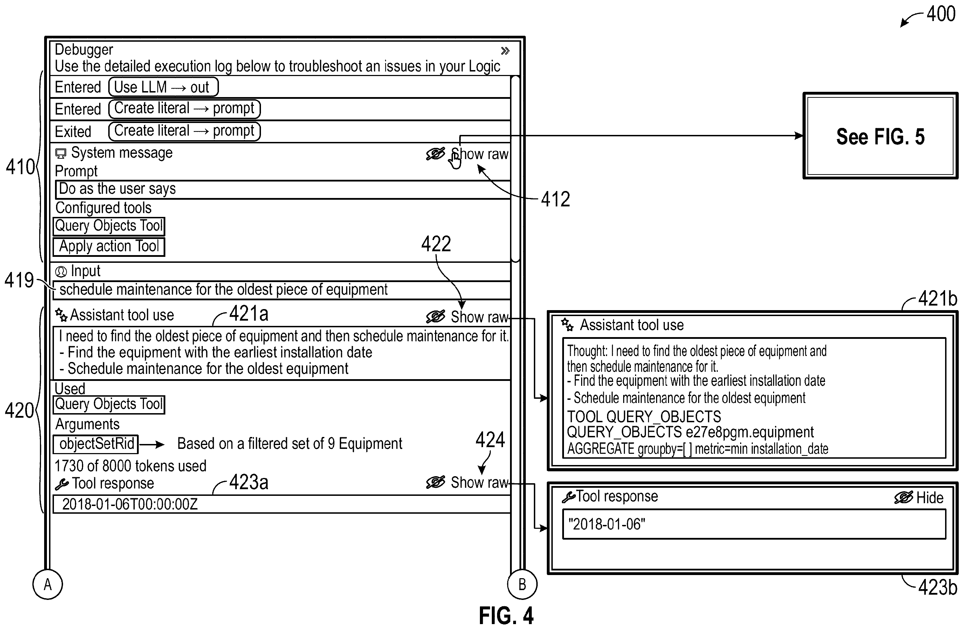

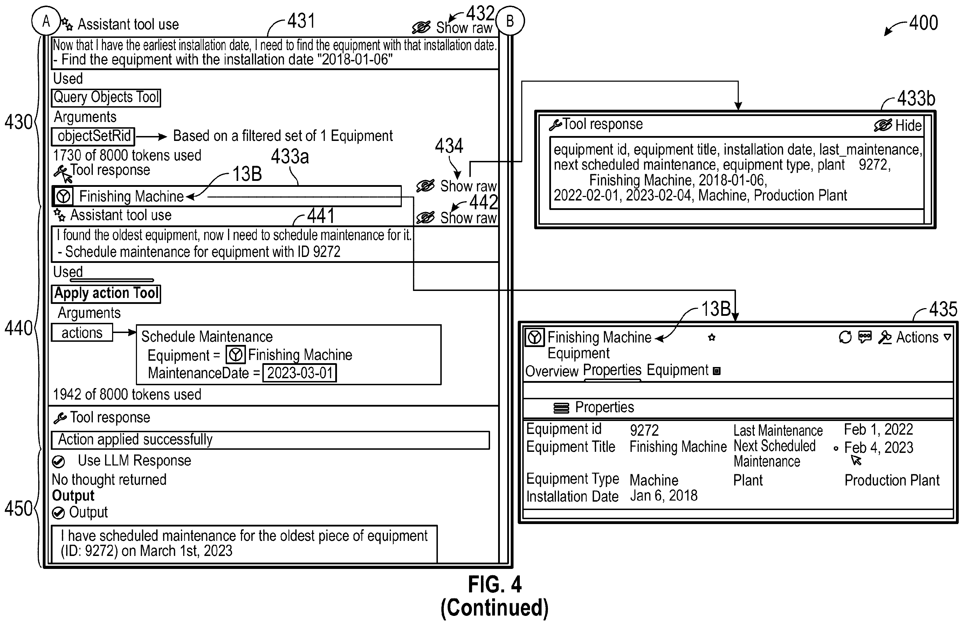

**Figure 4** illustrates an example debug panel user interface 400, which may also be referred to herein as a debug panel 400. The debug panel 400 may be displayed by a computing device, such as a computer, laptop, mobile device, tablet, phone, or the like. For example, a computing device of an AIS, such as AIS 102 or a user device, such as user device 150, may render the debug panel 400. User interface 400 can facilitate a user interacting with an LLM. The debug panel 400 can facilitate viewing interactions between an AIS and an LLM including inputs and outputs to and from the AIS and/or LLM. The debug panel 400 can improve prompt engineering such as by displaying a series of inputs and outputs between an AIS and an LLM. In some implementations, the debug panel 400 may be displayed adjacent to user interface 300, such as within a same display screen simultaneously. In some implementations, the debug panel 400 and user interface 300 may comprise a single, integrated user interface. Advantageously, displaying the debug panel 400 adjacent to user interface 300 may improve prompt engineering such as by providing feedback to a user via debug panel 400 which a user can view simultaneously with viewing inputs of user interface 300 which can help the user refine or improve the inputs of user interface 300. In some implementations, a device or system comprising one or more hardware processors, such as a computing device associated with AIS 102 and/or user device 150, may display portions of the debug panel 400 based on at least interactions between an AIS and LLM. Accordingly, a device or system may be described with reference to user interface 400 as performing various operations that may be related to user interface 400.

The example debug panel 400 can include an initialization portion 410, a task prompt portion 419, a first LLM interaction portion 420, a second LLM interaction portion 430, a third LLM interaction portion 440, and a response portion 450. The number of LLM interaction portions is not intended to be limited by the present example of Figure 4. In some implementations, user interface 400 may include a single LLM interaction portion. In some implementations, user interface 400 may include any number of a plurality of LLM interaction portions, such as more than three LLM interaction portions. The number of LLM interaction portions included in user interface 400 may depend on the complexity of a prompt or task prompt.

One or more portions of user interface 400 can be hidden from, or displayed to, a user's view. For example, user interface 400 can include one or more "show raw" buttons (e.g., 412, 422, 424, 434) which a user may select to view raw versions of data that may be summarized or otherwise shortened in the corresponding text box. Raw versions of data may include additional data not originally displayed in user interface 400, such as the actual textual data sent to the LLM in a prompt or provided in a response from the LLM. Raw versions of data may be displayed within user interface 400. Advantageously, user interface 400 may allow a user to view interactions between an AIS and an LLM at a level of detail that is desirable for the user.

Initialization portion 410 can display information relating to variables that have been set by a user, such as variables set by a user via user interface 300. Initialization portion 410 can display input variables and/or output variables. Initialization portion 410 can display a system prompt variable and/or an output schema variable. Initialization portion 410 can display variable names and/or data stored as a variable. In this example, initialization portion 410 displays "out" as the variable name to which a device or system can save a response from an LLM. In this example, the initialization portion 410 displays "prompt" as the variable name to which an initial system prompt is saved and also displays the initial system prompt as "Do as the user says". Initialization portion 410 can also display any tools that have been selected and/or configured by a user (e.g., via user interface 300) and which the AIS may implement in conjunction with the LLM when responding to a user's task. In this example, initialization portion 410 displays "query objects tool" and "apply action tool" as the tools configured by the user.

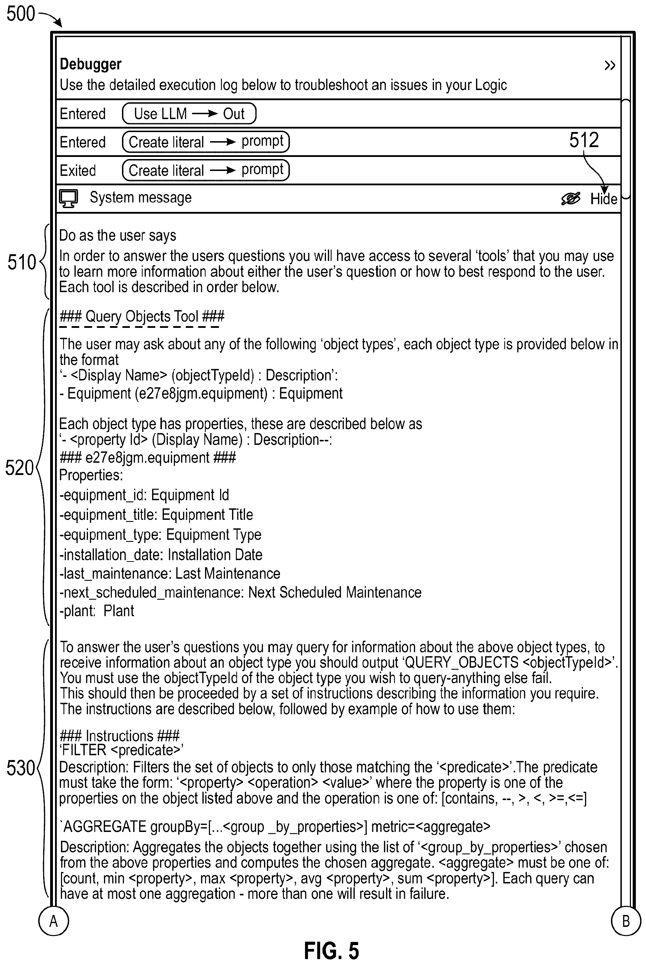

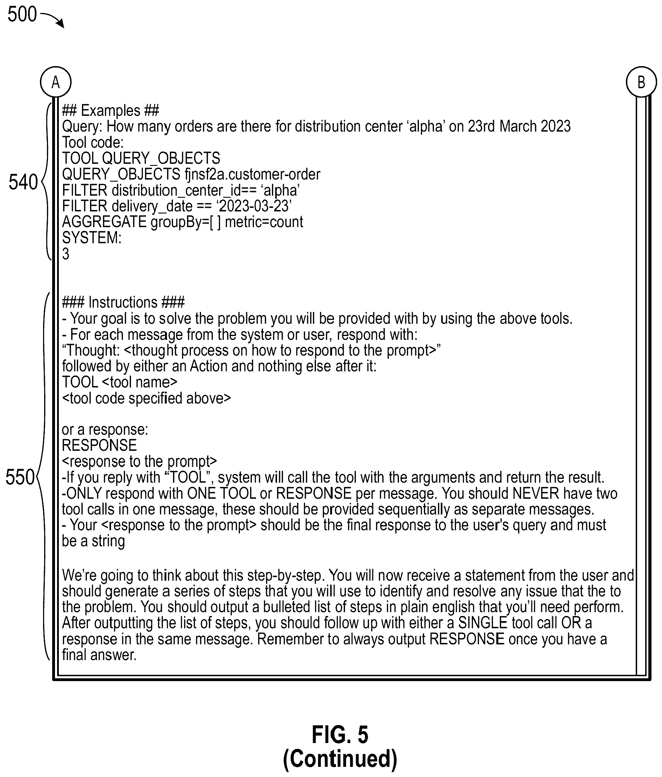

Initialization portion 410 can include a show raw button 412. In response to a user selecting the show raw button 412, the initialization portion 410 can display additional information (e.g., raw text data) corresponding to data already displayed in the initialization portion 410. Figure 5 illustrates an example of raw data that the user interface 400 may display in response to user selection of show raw button 412. User interface 400 may toggle between showing raw data and hiding raw data in response to user selection of show raw button 412 and/or a hide button 512 (shown in FIG. 5).

Task prompt portion 419 can display a task selected or input by a user for an LLM to perform. The user may have selected the task via user interface 300. In this example, the task prompt portion 419 displays "schedule maintenance for the older piece of equipment" as the task prompt which the user may have input via user interface 300.

The first LLM interaction portion 420 can display data output from an LLM. Data output from an LLM can comprise text data that may be formatted as a string. The LLM may output data in response to a prompt provided to the LLM from an AIS. First LLM interaction portion 420 can include a first LLM output, which is an "LLM thought" 421 in the example of Figure 4 (e.g., first LLM thought 421a and/or raw first LLM thought 421b). A user may select to view first LLM thought 421a or raw first LLM thought 421b by selecting show raw button 422. First LLM thought 421 can include a step-by-step outline for accomplishing the task requested by the user. The LLM may generate the information of first LLM thought 421 based on a prompt provided to the LLM. Advantageously, causing the LLM to generate step-by-step thought process for accomplishing a task, such as by providing a prompt with to the LLM with instructions to do so, may facilitate understanding operations performed by the LLM in accomplishing the user's requested task, which can help a user understand how an LLM output or response was generated which may improve debugging and/or prompt engineering. As shown in this example, first LLM thought 421 shows the steps of "find the equipment with the earliest installation date" and "schedule maintenance for the oldest piece of equipment" as the steps that the LLM has determined that need to be performed to satisfy the user's task. As shown in raw first LLM thought 421b, the data output from the LLM can also include a tool call. The LLM can format the tool call according to information in a prompt provided to the LLM. In this example, the LLM output includes a "query objects" tool call to query data objects having a specific data object type (e.g., equipment object type). The tool call indicates an aggregate operation to perform on the data objects when querying the data objects. In this example, the aggregate operation of the tool call is to find a data object (e.g., equipment object) with the minimum installation date (e.g., oldest piece of equipment).

The first LLM interaction portion 420 can display a tool used by an AIS and/or data processing service in response to the data output from an LLM, such as a tool call in an LLM thought. For example, the AIS can receive the LLM data output (e.g., LLM thought) which can include a tool call, and the AIS can provide the tool call to a data processing service for the data processing service to perform the tool call. In some implementations, the tool call from the LLM is in the format needed to successfully fulfill the tool call by the corresponding data processing service and, thus, the AIS may simply extract the tool call from the LLM output and pass it to the data processing service. In some examples, the AIS can parse the tool call provided by the LLM and reformat the tool call to be compatible with a data processing service. For example, the AIS may reformat the tool call provided by the LLM as an API call and/or HTTP request to be provided to a data processing service. In this example, the first LLM interaction portion 420 displays that a query objects tool was used.

The first LLM interaction portion 420 can include a first tool response 423 (e.g., first tool response 423a and/or raw first tool response 423b). A user may select to view first tool response 423a or raw first tool response 423b by selecting show raw button 424. First tool response 423 can display data from a data processing service provided in response to a tool call. In this example, a data processing service has returned the earliest installation date (e.g., 2018-01-06) for data objects having an equipment object type in response to a tool call generated by the LLM. In some implementations, an AIS can reformat a tool response provided by a data processing service. For example, an AIS can parse a tool response to structure a tool response in a format that may be usable by an LLM. In this example, first tool response 423a displays tool response data in a raw output format from a data processing service. Moreover, the raw first tool response 423b displays tool response data which may have been parsed and formatted by an AIS to be provided to an LLM in a format that may be compatible with and/or understood by an LLM. In some implementations, an AIS can parse a tool response to format a tool response as a string data type to be provided to an LLM. Advantageously, parsing a tool response from a data processing service to change a format or data type of the tool response can improve the technical field of LLMs such as by enhancing the capabilities of LLMs to interact with data processing services.

The second LLM interaction portion 430 can display data output from an LLM. Data output from an LLM can comprise strings of data, such as text. Data output from an LLM within second LLM interaction portion 430 may have been generated by the LLM and/or received at an AIS subsequent to the first LLM interaction portion 420. For example, the LLM may generate data in the second LLM interaction portion 430 in response to receiving a subsequent prompt from an AIS, which can include a tool response, such as shown and/or described in first LLM interaction portion 420. Second LLM interaction portion 430 can include a second LLM output, which is a second "LLM thought" 431 in the example of FIG. 4, which can be displayed to a user in a non-raw version or raw version. In this example, a raw version of second LLM thought 431 is not shown for simplicity. A user may select to view second LLM thought 431 in non-raw or raw version by selecting show raw button 432. Second LLM thought 431 can indicate a next step to perform in accomplishing the task requested by the user, or portion of the task. The LLM may generate the information of second LLM thought 431 based on a prompt provided to the LLM, such as a subsequent prompt generated by an AIS in response to a first LLM thought. As shown in this example, second LLM thought 431 shows the step of "find the equipment with the installation date '2018-01-06'" as a step that the LLM has determined that needs to be performed to satisfy the user's task. Although not shown for simplicity, the data output from the LLM can include a tool call. In this example, the data output from the LLM in second LLM thought 431 may, for example, include a "query objects" tool call to query data objects having a specific data object type (e.g., equipment object type). For example, the tool call may include a filter operation to filter equipment data objects according to a criteria (e.g., installation date of 2018-01-06) to find equipment data object(s) matching that criteria.

The second LLM interaction portion 430 can display a tool used by an AIS and/or data processing service in response to the data output from an LLM, such as a tool call in an LLM thought. For example, the AIS can receive the LLM data output (e.g., second LLM thought) which can include a tool call, and the AIS can provide the tool call to a data processing service for the data processing service to perform the tool call. In some implementations, the AIS can parse the tool call provided by the LLM and reformat the tool call to be compatible with a data processing service. For example, the AIS may reformat the tool call provided by the LLM as an API call and/or HTTP request to be provided to a data processing service. In this example, the second LLM interaction portion 430 displays that a query objects tool was used.

The second LLM interaction portion 430 can include a second tool response 433 (e.g., second tool response 433a and/or raw second tool response 433b). A user may select to view second tool response 433a or raw second tool response 433b by selecting show raw button 434. Second tool response 433 can display data from a data processing service provided in response to a tool call. In some implementations, an AIS can reformat a tool response provided by a data processing service. For example, an AIS can parse a tool response to structure a tool response in a text format that is usable by the LLM. In this example, second tool response 433a displays tool response data as a data object format, which may correspond to a format received from a data processing service (such as from an object database that was queried using the query objects tool call). To allow the LLM to access the data object returned from the tool call, in this example the AIS converts the data object to a text string, raw second tool response 433b, that may be transmitted to the LLM in a subsequent prompt. For example, the AIS may access the properties of the data object, e.g., via a connect to the object database that provided the tool response) and aggregate certain properties in a text string in a format that is usable by the LLM. In some implementations, raw second tool response 433b may comprise comma separated values (CVS). In this example, a data processing service has returned the "Finishing Machine 13B" data object which can have data properties as shown and/or described in greater detail with reference to data object pane 435. An AIS has parsed the data object tool response, and/or accessed another data source with information regarding the data object, to generate a string including the corresponding object properties, as shown in raw second LLM tool response 433b, to provide to an LLM. Advantageously, parsing a tool response from a data processing service to change a format or data type of the tool response can improve the technical field of LLMs such as by enhancing the capabilities of LLMs to interact with data processing services.

A user can select to view data object pane 435, such as by selecting the tool response 433a. Data object pane 435 may be displayed within user interface 400 and/or may displayed separate from user interface 400, such as in another application that provides viewing of data object information. Data object pane 435 can include information relating to a data object returned as a tool response. In this example, data object pane 435 displays information relating to the "Finishing Machine 13B" data object. As shown, the "Finishing Machine 13B" data object (or other data objects having a same data object type) can have one or more properties including: equipment ID, equipment title, equipment type, installation date, last maintenance date, next scheduled maintenance date, and/or a plant. As discussed, an AIS can parse the data object to generate a string (e.g., shown in raw second tool response 433b) including the data properties shown in data object pane 435.

The third LLM interaction portion 440 can display data output from an LLM. Data output from an LLM can comprise strings of data, such as text. Data output from an LLM within third LLM interaction portion 440 may have been generated by the LLM and/or received at an AIS subsequent to the second LLM interaction portion 430. For example, the LLM may generate data in the third LLM interaction portion 440 in response to receiving a subsequent prompt from an AIS, which can include a tool response, such as shown and/or described in second LLM interaction portion 430. Third LLM interaction portion 440 can include a third LLM output, which is a third "LLM thought" 441 in the example of FIG. 4 which can be displayed to a user in a non-raw version or raw version. In this example, a raw version of third LLM thought 441 is not shown for simplicity. A user may select to view third LLM thought 441 in non-raw or raw version by selecting show raw button 442. Third LLM thought 441 can include a step-by-step outline for accomplishing the task requested by the user, or portion of the task. The LLM may generate the information of third LLM thought 441 based on a prompt provided to the LLM, such as a subsequent prompt generated by an AIS in response to a second LLM thought. As shown in this example, third LLM thought 441 shows the step of "schedule maintenance for equipment with ID 9272" as a step that the LLM has determined that needs to be performed to satisfy the user's task. Although not shown for simplicity, the data output from the LLM can include a tool call. In this example, the data output from the LLM in third LLM thought 441 may, for example, include an "apply actions" tool call to apply an action. In some implementations, an AIS may apply an action. In some implementations, a data processing service may apply an action. A data processing service can apply an action to a data object. In this example the apply action tool call may apply a schedule maintenance action to a data object.

The third LLM interaction portion 440 can display a tool used by an AIS and/or data processing service in response to the data output from an LLM, such as a tool call in an LLM thought. For example, the AIS can receive the LLM data output (e.g., third LLM thought) which can include a tool call, and the AIS can provide the tool call to a data processing service for the data processing service to perform the tool call. In some implementations, the AIS may perform the tool call. In this example, the third LLM interaction portion 440 displays that an apply action tool was used.

The third LLM interaction portion 440 can include a third tool response. The third tool response may have been generated by an AIS and/or a data processing service in response to performing a tool call. In this example, the third tool response indicates that an action was applied successfully. The third tool response may comprise a text format that is usable by an LLM. An AIS may provide the third tool response to an LLM.

The response portion 450 can indicate that no thought has been returned from an LLM. This may be because the LLM may have determined that no subsequent operations are needed to accomplish the user's requested task. In this example, the response portion 450 indicates that the user's requested task is accomplish by indicating that maintenance has been scheduled for the oldest piece of equipment. An AIS can output a response to a user, such as may be shown in response portion 450. In some implementations, an AIS can parse a response from an LLM to change a data format, such as may have been indicated by a user.

**Figure 5** illustrates an example user interface 500 illustrating an example of raw data that may be shown, for example, as part of the debugger panel 400. User interface 500 may be displayed in response to a user selection to show raw data. User interface 500 may display a raw version of data displayed in user interface 400. User interface 500 may display one or more portions of a prompt provided to an LLM, such as an initial prompt pursuant to a user request. An AIS may generate one or more portions of the prompt displayed in user interface 500. A user may not have generated or input one or more portions of a prompt displayed in user interface 500. An AIS may generate one or more portions of the prompt (e.g., context) included in user interface 500 automatically based on one or more user inputs, such as user inputs received via user interface 300. A prompt, or portions thereof, such as prompt shown in user interface 500, can provide information to an LLM, such as instructions, in a natural language such as English, to help the LLM to accomplish a user's requested task. Advantageously, automatically generating a prompt, such as shown in user interface 500, may reduce a burden on prompt engineering on a user and may improve the effectiveness of a prompt in inducing an LLM to generate a useful response.

User interface 500 can include a preface portion 510, a tool data portion 520, a tool instruction portion 530, a tool example portion 540, and a general instructions portion 550.

Preface portion 510 can include a system prompt. At least a portion of the preface portion 510 can include a user input. In this example, a user may have input "do as the user says" as a system prompt such as via user interface 300. An AIS system may supplement or augment the user input. In this example, an AIS has supplemented the user input system prompt with additional instructions to an LLM for accomplishing the user input system prompt.

Tool data portion 520 can include tool information associated with a tool selected or configured by a user, such as via user interface 300. An AIS may automatically generate the data shown in tool data portion 520 based on a user input. The tool data portion 520 can include data that may be useful to an LLM to implement one or more tools which the LLM may need to perform a user's requested task. In this example, tool data portion 520 includes information associated with a query objects tool. The tool data portion 520 indicates to an LLM that the user may ask about one or more data object types, which may be determined based on a user input, such as via user interface 300. In this example, tool data portion 520 includes information associated with an equipment object type, which may have been selected by a user, such as via user interface 300.

The tool data portion 520 can indicate to an LLM how data is structured or formatted, such as according to an ontology. The tool data portion 520 can indicate to an LLM a format of a data object type, such as an equipment data object type. The tool data portion 520 can indicate to an LLM one or more properties associated with a data object type. In this example, the tool data portion 520 indicates that a data object having an equipment data object type would have the properties of: equipment ID, equipment title, equipment type, installation date, last maintenance date, next scheduled maintenance, and a plant.

Tool instruction portion 530 can include instructions for implementing a tool. Tool instruction portion 530 can include instructions for formatting a tool call. In this example, the tool instruction portion 530 indicates to the LLM that the LLM should output a tool call in the format "QUERY_OBJECTS <objectTypeld>" if the LLM desires to receive information about an object type. An AIS may pass such an output to a data processing service to query data. In this example, the tool instruction portion 430 includes additional information or instructions relating to the query objects tool. The tool instruction portion 430 includes instructions for implementing a filter operation on one or more data objects. Tool instruction portion 430 can indicate how to format a request to filter data objects. The tool instruction portion 430 includes instructions for implementing an aggregate operation on one or more data objects. Tool instruction portion 430 can indicate how to format a request to aggregate data objects. An LLM can generate a tool call based on at least the information included in tool instruction portion 530, such as a query objects tool call that includes one or more of a filter data operation or an aggregate data operation.

Tool example portion 540 can include one or more tool implementation examples. An AIS may automatically generate and/or provided the tool implementation examples, such as based on one or more tools input by a user, such as via user interface 300. In some implementations, an AIS may access hard-coded tool implementation examples to display in tool example portion 540. In some implementations, an AIS may dynamically generate tool implementation examples which may be based on various factors such as user input, LLM outputs, a task to be performed, or the like. In this example, a single tool implementation example is shown. This is not intended to be limiting of the present disclosure. In some implementations, tool example portion 540 may include a plurality of tool implementation examples. Tool implementation examples can train an LLM how to implement a tool such as providing the LLM with one or more examples on how a tool can be used.

In this example, the tool implementation example shows an example implementation of a query objects tool. The tool implementation example indicates an initial query, which may be provided by a user and/or by an LLM. The tool implementation example indicates an example format of a tool call, including a query objects tool call to query data objects having a customer-order object type. The tool implementation example indicates a filter objects operation to filter customer-order data objects by those having a distribution center ID matching "alpha". The tool implementation example indicates a filter objects operation to filter customer-order data objects by those having a delivery date of "2023-03-23". The tool implementation example indicates an aggregate objects operation to aggregate the filtered customer-order data objects according to a metric count. The tool implementation examples indicates that a system (e.g., a data processing service and/or an AIS) returns a result to the tool call of "3".

General instructions portion 550 can include instructions to the LLM for accomplishing a user's requested task. In some implementations, an AIS may access hard-coded instructions to display in general instructions portion 550. In some implementations, an AIS may dynamically generate instructions which may be based on various factors such as user input, LLM outputs, a task to be performed, or the like. General instructions portion 550 indicate to an LLM a format for outputting an LLM response. General instructions portion 550 can indicate to an LLM to output a thought for how to respond to a prompt. General instructions portion 550 can indicate to an LLM to output a tool call including text usable by the AIS to access, retrieve, and/or determine additional information that may be usable by the LLM. General instructions portion 550 can indicate to an LLM to output a thought and accompanying tool call or a final response. General instructions portion 550 can indicate to an LLM to process a prompt one step at a time. General instructions portion 550 can indicate to an LLM to output a bulleted list of thought for how to respond to a prompt. A bulleted list may help a user debug interactions with an LLM. General instructions portion 550 can indicate to an LLM to output only a single tool call per LLM output. Instructing an LLM to output only a single tool call per LLM output may facilitate inducing the LLM to generate a useful or accurate final response, such as by inducing the LLM to process a prompt one step at a time, and may also help a user debug interactions with an LLM. General instructions portion 550 can indicate to an LLM to output a thought in a natural language, such as English, which may help a user debug interactions with an LLM.

### Example Method

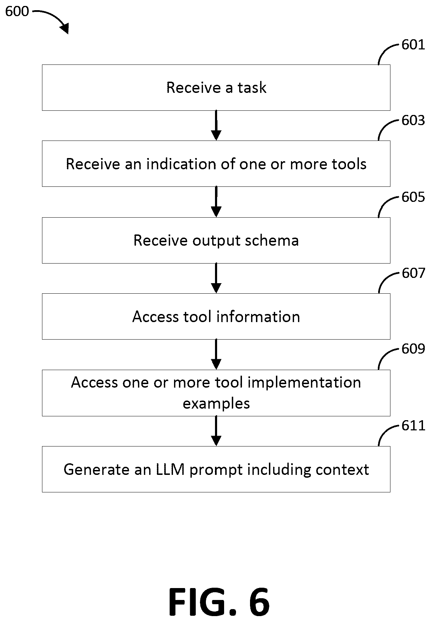

**Figure 6** is a flowchart illustrating an example process 600 of generating a prompt to provide to an LLM. This process, in full or parts, can be executed by one or more hardware processors, whether they're associated with a singular or multiple computing devices like user device 150, AIS 102, data processing services 120, LLM 130, and even devices in remote or wireless communication. The implementation may vary. For example, it could be controlled by processors related to an AIS, such as AIS 102, or can involve modifications like omitting blocks, adding blocks, and/or rearranging the order of execution of the blocks. Process 600 serves as an example and isn't intended to restrict the present disclosure.

Process 600 may provide improvements to the technical field of LLMs, such as by generating effective prompts, facilitating rapid and efficient prompt design, and/or reducing a burden of prompt engineering on a user. For example, one or more hardware processors of an AIS may execute process 600 to generate, augment, and/or supplement a prompt to provide to an LLM. The prompt may include context automatically supplemented to the prompt by the AIS to improve an effectiveness of the prompt in inducing the LLM to generate a useful response.

At block 601, an AIS, such as AIS 102, shown and/or described herein, can receive a task. The AIS can receive the task via a user interface of a user computing device, such as via user interface 300 of user computing device 150 shown and/or described herein. The task can include a request from a user for an LLM to do something.

At block 603, the AIS can receive an indication of one or more tools. The AIS can receive the indication via a user interface of a user computing device, such as via user interface 300 of user computing device 150 shown and/or described herein. The one or more tools may be selected by a user. The one or more tools may aid the LLM to perform the task. The AIS may additionally receive information associated with the one or more tools at block 603, such as an object type associated with a query object tool, an action type associated with an apply action tool, an ontology function, a date format, or the like.

At block 605, the AIS can receive an output schema. The AIS can receive the output schema via a user interface of a user computing device, such as via user interface 300 of user computing device 150 shown and/or described herein. The output schema can indicate a variable name under which to save an LLM response. Advantageously, a user may select to save an LLM output as a variable for subsequent use, such as by an LLM and/or by a system such as a data processing service. The output schema can indicate a data format for outputting an LLM response. The output schema can indicate a data type for outputting an LLM response. Advantageously, a user may select to format an LLM output with a specific format which can facilitate using the LLM output in subsequent workflows or processes, such as by rendering the LLM output compatible with subsequent workflows or processes.

At block 607, the AIS can access tool information. Tool information may be associated with one or more tools selected by a user. Tool information can comprise instructions for implementing one or more tools. Tool information can comprise instructions for formatting a tool call. Tool information can comprise information relating to how data associated with a tool is formatted or structured, such as according to an ontology. Tool information can comprise information relating to data objects or data object types associated with a tool. Tool information can comprise information relating to properties of data objects. For example, tool information can indicate properties associated with data objects having a particular data object type.

In some implementations, the AIS may access the tool information from memory. For example, the tool information may be hard-coded (e.g., that same for each use of the tool). In some implementations, accessing the tool information may comprise the AIS dynamically generating the tool information based on various factors such as user input, LLM outputs, a task to be performed, or the like.

At block 607, the AIS can access one or more tool implementation examples. In some implementations, the tool implementation examples may be comprised as part of the tool information. The tool implementation examples may train an LLM for how to implement one or more tools. In some implementations, the AIS may access the tool implementation examples from memory. For example, the tool implementation examples may be hard-coded. In some implementations, accessing the tool implementation examples may comprise the AIS dynamically generating the tool implementation examples based on various factors such as user input, LLM outputs, a task to be performed, or the like. In some implementations, accessing tool implementation examples stored in memory may facilitate rapidly generating an LLM prompt with sufficient examples to train the LLM. For example, accessing tool implementation examples from memory may obviate the need for a processor (and/or user) to reproduce multiple tool implementation examples when generating a prompt which can improve computer efficiency and reduce processing requirements. In some implementations, the AIS may update tool implementation examples stored in memory such as based on interactions with an LLM, such as if an LLM operates as desired by returning a useful response when provided with certain tool implementation examples.

At block 611, the AIS can generate an LLM prompt. The LLM prompt can include context. The AIS can generate the LLM prompt based on at least the task, indication of one or more tools, output schema, tool information, and/or tool implementation examples. The prompt can include one or more of the task, indication of one or more tools, output schema, tool information, and/or tool implementation examples. The prompt may be provided to an LLM to cause the LLM to accomplish an objective such as to satisfy the user's request. Advantageously, generating the prompt by the AIS may reduce a burden of prompt engineering on a user. Moreover, generating the prompt according to process 600 can improve an effectiveness of the prompt in causing an LLM to return a useful response to the prompt.

### OVERVIEW OF STRUCTURING INPUTS AND OUTPUTS TO AN LLM

Disclosed herein is an artificial intelligence system that enables users to debug LLMs with a rich view. For example, a user interface may include a user interface showing detailed, segmented logs of all (or some subset of historical) inputs and outputs from the LLM. In the case of historical logs, the system includes security and data privacy measures to ensure that private or confidential electronic data assets are not inadvertently revealed.

Further, the user can select any prompt or response from the LLM and modify it, such as in a current prompt that the user is developing. As another example, the system may enable a user to select certain "tools" (e.g., to access various data processing services) to include into a prompt; the system may then automatically edit the prompt to instruct the LLM to, for example, query or access the selected tool. For example, in some implementations, the system may enable a user to "hard code" LLM prompts by manually editing or adding to a LLM prompt, such as through a text box or the like. The system may also enable a user to provide indications of a modification (e.g., by providing a description of the necessary changes or by entering or editing information via a user interface), and the system may automatically generate a modified LLM prompt. Advantageously, such editing enables the user to test different scenarios and more accurately identify which aspects of the system are working as expected, as well as which aspects can be improved. For example, a user may discover through testing that the system's prompt generation module has errors.

Further, often an LLM will call another LLM, resulting in a "nested" interaction history. As discussed herein, the system may enable the user to view not only interactions with the top-level LLM, but also the nested LLM calls (including the interaction history or "logs" of communications of those nested LLM calls), and to edit and execute those portions of the interaction history as well. For example, in some embodiments, if a first LLM queries a second LLM (or sends a second prompt to the same LLM), the system may display conversation history that includes: 1) an initial prompt provided to the first LLM; 2) an output from the first LLM that is provided as a second prompt to the second LLM; 3) a first response from the second LLM to the second prompt from the first LLM; and 4) a second response from the first LLM. The system may then enable a user to, for example, edit the initial prompt provided to the first LLM and execute the nested execution (e.g., the call to the second LLM) with the edited initial prompt, and this process may be repeated multiple times to test variations in the first prompt, for example, without requiring re-execution of all of the nested calls. The system may enable the user to do this within a single view, such as in a user interface displayed to the user.

Further, as described above, the system may enable an LLM to query or otherwise utilize certain "tools," enabling access to various data processing services. In some embodiments, if a tool is utilized by the system, the system may display logs associated with the utilized tool. For example, the system may display inputs to and outputs from the utilized tool, which may be stored as part of the conversation history also. Similarly, in some embodiments, the system may display logs associated with particular functions or formulas that may be accessed by an LLM.

In some embodiments, the LLM responses may be parsed out for relevant information, including information that indicates a format other than natural language. For example, advantageously, the system can interpret the LLMs requests to "tools" (in the form of "tool calls" included in an LLM response) and show a more user-friendly version of what the LLM has output. For example, if an output from the LLM includes tool call for querying some structured data/business objects (e.g., ontology objects), instead of showing the plain text output (of the tool call), the system may display a visualization, such as a rendered version of the query (and/or responses) cast into terms the user would understand, along with a link to view the data objects. In some implementations, such a visualization may comprise infographics (such as graphs, logs, pictures, etc.) and text (e.g., rich-text, links, etc.). As another example, if an LLM response includes a tool call to a tool for generating a graph, the system may execute a call to the associated data processing service (or "tool"), receive the graph in response to the call, and then display the generated graph, without displaying the plain-text query included in the LLM response.

In some embodiments, the system may enable a user to set "breakpoints" within an interaction history (such as a series of prompts to and responses from an LLM). For example, given a series of prompts to and responses from an LLM, the system may enable a user to identify a point to stop or pause execution. In some embodiments, the system may enable a user to set conditional breakpoints, wherein execution is stopped upon some condition being met (e.g., when a specific tool is invoked). Similarly, the system may enable a user to set a "startpoint" or "stoppoint." For example, given a series of prompts to and responses from an LLM, the system may enable a user to identify a point to start execution (e.g., start at the third prompt to the LLM instead of re-starting from the beginning of the interaction).

### Example Debugging Methods

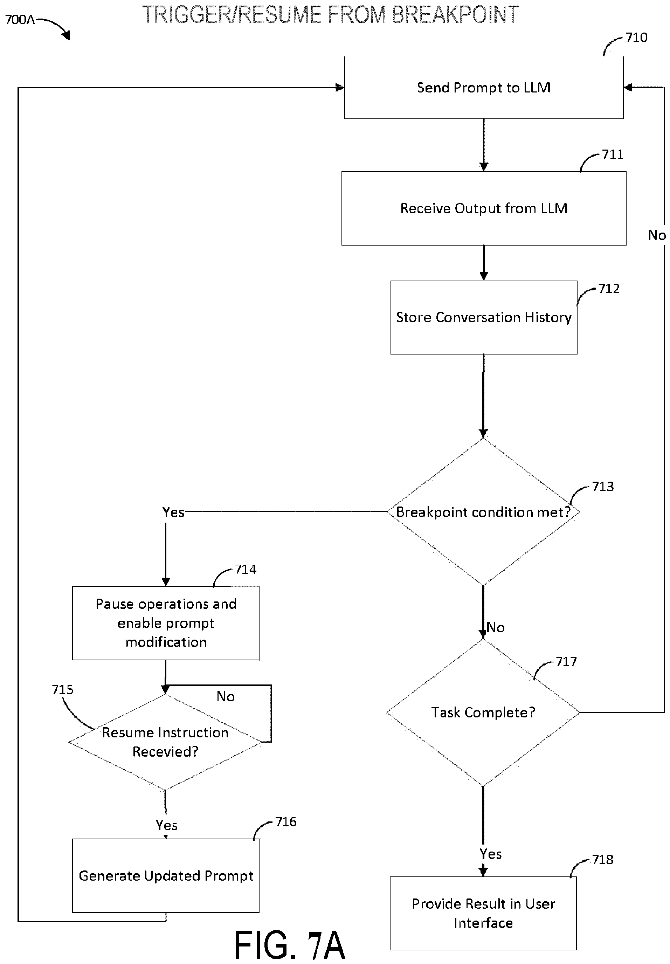

Figure 7A is a flowchart illustrating an example method 700A for debugging LLM interactions through the implementation of "breakpoints" according to various embodiments. In general, a breakpoint allows performance of a multi-stage task, e.g., having multiple interactions between the AIS and LLM before a final response is received from the LLM, to be paused (or halted) to allow a user to examine the interaction history and make desired updates. In some implementations, the method 700A may performed in part or in full by an AI system 102, including various modules within an AI system 102. In various implementations, any one or all of the blocks may be performed by other components discussed herein, and/or any other suitable computing device or service, either alone or in combination with components of an AIS 102. The indicated flow of Figure 7A is exemplary of only certain processes and is not meant to include all possible blocks.

At block 710, the AIS 102 sends a prompt to an LLM 130. As described above, the prompt may be generated by a prompt generation module 108 (Figure 1) and may comprise or be generated based on a natural language user input.

At block 711, the AIS 102 receives a response from the LLM 130. The response may comprise natural language that is responsive to a task identified in the LLM prompt. In some scenarios, the response may include a tool call or some request for data processing. As noted above, a textual tool call in the LLM response may be extracted by the AIS and provided to a data processing service, such as in the form of an API call, to initial a data processing service.

At block 712, the AIS 102 stores (or updates) the conversation history (or "interaction history"). For example, a conversation history may include some or all of the previous prompts to the LLM 130 and/or responses from LLM 130. A conversation history may further include some or all of the previous inputs to and outputs from data processing services. A conversation history may further include context associated with the conversation, such as context provided by context module 110. In some implementations, the AIS 102 may store a summary of some or all of the conversation history. For example, the AIS 102 may store only a recent portion of the conversation history rather than the entire conversation history. As another example, the AIS 102 may store only the most relevant pieces of the conversation history. As another example, the AIS 102 may generate and store a narrative and/or other summarization of the conversation history. Advantageously, storing a summary of some or all of the conversation history may minimize costs associated with storage and memory, especially in scenarios in which the conversation history is voluminous.

At block 713, the AIS 102 determines whether a breakpoint condition is met. In some implementations, the breakpoint condition could be a user input, such as a user pressing a keyboard combination or clicking a "break" indicator in a user interface. In some embodiments, a breakpoint condition is defined by user-selected criteria. For example, a user may indicate that a breakpoint condition is met when the response received in block 711 includes a tool call of a specific tool or a request for a specific data processing service. In some implementations, the AIS 102 may check whether a breakpoint condition is met at a different point in method 700A (either as an alternative or in conjunction with block 713). For example, in some implementations, the AIS 102 may check whether a breakpoint condition is met before block 710 and/or before block 711.

If the AIS 102 determines that a breakpoint condition is met at block 713, then at block 714, the AIS 102 pauses operations and enables prompt modification. For example, the AIS 102 may hold off sending a next prompt to the LLM 130 and instead wait for user input. The AIS 102 may also provide the user with a way to modify prompts sent to LLM 130, including the prompt sent in block 710, which will be included in the next prompt sent to the LLM. In some implementations, the AIS 102 may provide the user with a user interface enabling prompt modification. Example user interfaces are described in further detail below.

At block 715, the AIS 102 determines whether it has received an instruction to resume operations, such as a predefined keypress, a click on a "resume" indicator, a time-out, etc. If not, the AIS 102 maintains its paused state and continues to await a resume instruction. If and when a resume instruction is received, at block 716, the AIS 102 generates an updated prompt. The updated prompt may be based on indications of prompt modification received from a user while operations were paused. The prompt may be generated by a prompt generation module 108. The AIS 102 may then proceed by sending the generated updated prompt the LLM 130 at block 710.

Alternatively, if, at block 713, the AIS 102 determines that a breakpoint condition has not been met, at block 717, the AIS 102 determines whether its task is complete. For example, the AIS 102 may determine whether a final response has been received from LLM 130. If the AIS 102 determines that its task is complete, at block 718, the AIS 102 may provide a result in a user interface. If the AIS 102 instead determines that its task is incomplete, the AIS 102 may then proceed by interacting with data processing services(s), as necessary, and sending a next prompt to LLM 130 at block 710, without pausing execution.

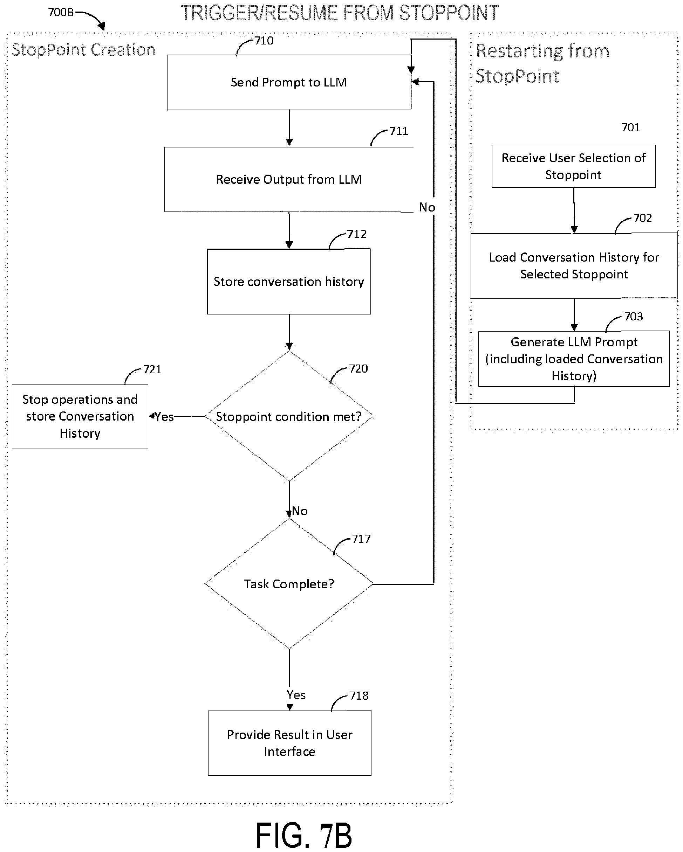

Figure 7B is a flowchart illustrating an example method 700B for debugging LLM interactions through the implementation of "stoppoints" (or "startpoints") according to various embodiments. In general, a stoppoint allows performance of a multi-stage task, e.g., having multiple interactions between the AIS and LLM before a final response is received from the LLM, to be paused and later restarted without re-executing all of the same interactions with the LLM. In some implementations, the method 700B may performed in part or in full by an AI system 102, including various modules within an AI system 102. In various implementations, any one or all of the blocks may be performed by other components as discussed herein and/or any other suitable computing device or service, either alone or in combination with components of an AIS 102. The indicated flow of Figure 7B is exemplary of only certain processes and is not meant to include all possible blocks.

Blocks 710, 711, and 712 in method 700B are the same as the corresponding blocks in method 700A, as illustrated in Fig. 7A.

At block 720, the AIS 102 determines whether a stoppoint condition is met. In some implementations, the stoppoint condition could be a user input, such as a user pressing a keyboard combination or clicking a "break" or "stop" indicator in a user interface. In some embodiments, a stoppoint condition is defined by comprises user-selected criteria. In some embodiments, breakpoints serve the same function as stoppoints. An example stoppoint condition may be when the response received in block 711 includes a tool call of a specific tool or a request for a specific data processing service. In some implementations, the AIS 102 may check whether a stoppoint condition is met at a different point in method 700B (either as an alternative or in conjunction with block 720). For example, in some implementations, the AIS 102 may check whether a stoppoint condition is met before block 710 and/or before block 711.

If the AIS 102 determines that a stoppoint condition is met at block 720, then at block 721, the AIS 102 stops operations and stores the conversation history. For example, a conversation history may include some or all of the previous prompts to the LLM 130 and/or responses from LLM 130. A conversation history may further include some or all of the previous inputs to and outputs from data processing services. A conversation history may further include context associated with the conversation, such as context provided by context module 110. In some implementations, the AIS 102 may store a summary of some or all of the conversation history. For example, the AIS 102 may store only a recent portion of the conversation history rather than the entire conversation history. As another example, the AIS 102 may store only the most relevant pieces of the conversation history. As another example, the AIS 102 may generate and store a narrative and/or other summarization of the conversation history. Advantageously, storing a summary of some or all of the conversation history may minimize costs associated with storage and memory, especially in scenarios in which the conversation history is voluminous. The conversation history may be stored as data, such as through the creation of a new Data Object. For example, the conversation history may be stored in persistent storage, such as a database, which may be later accessed.

Alternatively, if, at block 720, the AIS 102 determines that a stoppoint condition has not been met, at block 717, the AIS 102 determines whether its task is complete. For example, the AIS 102 may determine whether a final response has been received from LLM 130. If the AIS 102 determines that its task is complete, at block 718, the AIS 102 may provide a result in a user interface. If the AIS 102 instead determines that its task is incomplete, the AIS 102 may then proceed by sending a next prompt to LLM 130 at block 710.

After a stoppoint condition has been met and the conversation history has been stored, a user may subsequently "re-start" operations from such a stored stoppoint. For example, a user may access stoppoint data for one or more previously stored stoppoints. The previously stored stoppoints may have been stored by the same user or a different user, and may be from the same user session or a previous user session. As illustrated, at block 701, the AIS 102 receives user selection of a previously stored stoppoint. At block 702, the AIS 102 loads the previously stored conversation history for the user selected stoppoint. The loaded conversation history may then be available to be accessed for generating a new LLM prompt.

At block 703, the AIS 102 generates an LLM prompt. The prompt may comprise some or all of the loaded conversation history, or a summary of the loaded conversation history. For example, if the conversation history is voluminous, the AIS 102 may generate a prompt summarizing the conversation history associated with the loaded conversation history, thereby advantageously avoiding issues with a token limit. Then, at block 710, the AIS 102 may send the generated prompt to the LLM 130, thereby re-starting the process.

### Example User Interfaces

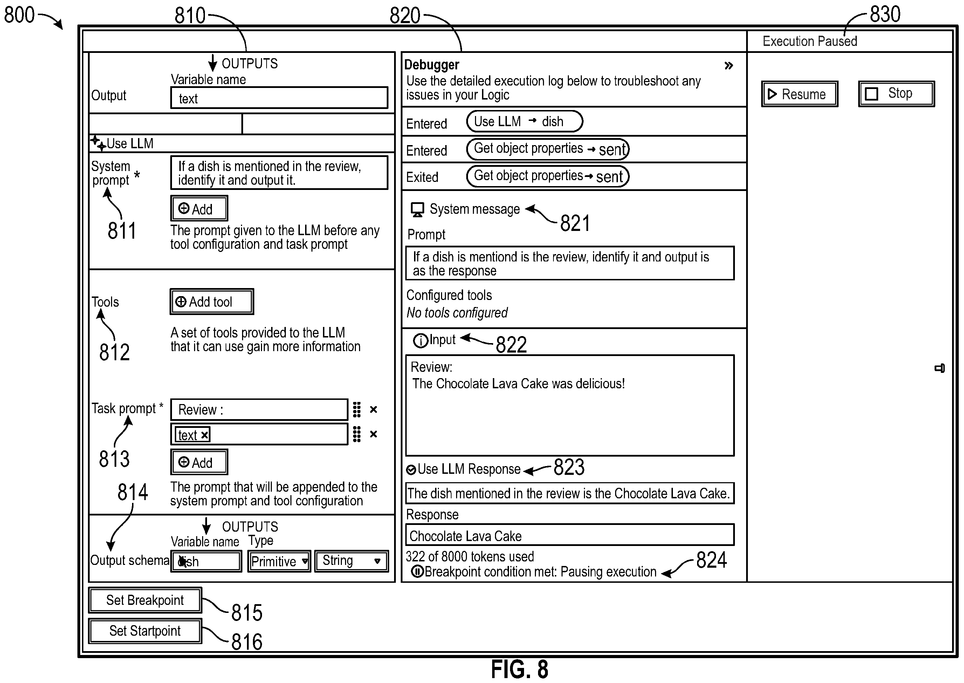

In some embodiments, the artificial intelligence system may include or provide for a graphical user interface for debugging interactions with an LLM. Figure 8 illustrates an example user interface 800 showing a debugging interface with a rich view. In this example, the user interface 800 includes a prompt modification pane 810, a debugger pane 820, and an execution pane 830.

The prompt modification pane 810 enables a user to provide user inputs that are used by the AIS to generate and/or modify LLM prompts. In this example, the prompt modification pane 810 includes a system prompt control 811, a tools control 812, a task prompt control 813, an output schema control 814, a breakpoint button 815, and a startpoint button 816. A user may use controls 811, 812, 813, and 814 to set and/or modify various aspects and/or properties of one or more LLM prompts. For example, a restaurant may configure an artificial intelligence system to perform the task of processing restaurant reviews, identifying dishes mentioned in the reviews, and sending an alert to a chef when a dish is mentioned in a review. This task may include multiple interactions (e.g., prompts to the LLM and responses from the LLM) that perform sub-tasks of the overall task. For example, a first interaction with the LLM could include a prompt to the LLM to analyze text to determine if a dish is mentioned and provide a tool call to a data processing service in an indicated format. The first response from the LLM could then include the tool call, which the AIS uses to query a data processing service (e.g., to search a database for an identified dish). A second LLM prompt could then provide the conversation history (e.g., the first prompt and first response), information from the data processing service regarding the identified dish, and a request to generate a review of the dish and, if the review is positive, to include a tool call to perform an action (e.g., generating a message to the chef). This back-and-forth process may continue multiple times without user intervention. Through the use of stoppoints, the interactions may be interrupted at any time and the conversation history stored for later use. The later use may then include loading the conversation history and using some or all of it in a next prompt, without re-executing those same sub-tasks through calls to the LLM and/or data processing services.

With the task execution paused (by selecting stoppoint or breakpoint), a user could then use user interface 800 to debug interactions with the artificial intelligence system. For example, as shown in Figure 8, a user may use system prompt control 811 to set a system prompt informing the artificial intelligence system and LLM what tasks to process, tools control 812 to set up tools that may be called by the LLM, task prompt control 813 to set any additional inputs to include in the prompt (e.g., a restaurant review), and output schema control 814 to configure the format of an output from an LLM. The user may also use breakpoint button 815 to configure breakpoints and startpoint button 816 to configure startpoints (as described above).

The debugger pane 820 contains a rich view of all interactions (also referred to herein as a "conversation") between the artificial intelligence system and an LLM. In the example of Figure 8, the debugger pane 820 displays an initial system prompt 821, an input 822, an LLM response 823, and a breakpoint condition notification 824. In various implementations and scenarios, the debugger pane 820 may display other types of interactions, such as tool calls. In various implementations, system prompt 821 and input 822 may include some or all of a prompt sent to an LLM. In some implementations, the debugger pane 820 may include a user control enabling a user to expand and/or minimize prompts and responses. For example, in the example of Figure 8, system prompt 821 may include only a relevant subset or summarization of the prompt sent to the LLM; the user interface may enable a user to expand system prompt 821 to display the entire text prompt (e.g., the raw text) sent to the LLM.

In the example of Figure 8, debugger pane 820 shows that a prompt, including a restaurant review, was sent to an LLM, the LLM responded by identifying a dish mentioned in the review, and outputted a text string response. Debugger pane 820 also shows that a breakpoint condition was met, resulting in execution being paused. In this example, the breakpoint condition may be that the LLM responded with the name of the dish mentioned in the review.

The execution pane 830 enables a user to resume or pause execution of the interactions. As shown, when execution is paused, a user may be enabled to further modify prompts via prompt modification pane 810 before resuming execution. In some implementations and scenarios, execution may be resumed from the same state as before execution was paused. Alternatively, in some implementations and scenarios, execution may be resumed from some other point, such as the beginning of the interaction. As described above, a "startpoint" may be selected by a user indicating a state to load before resuming execution.

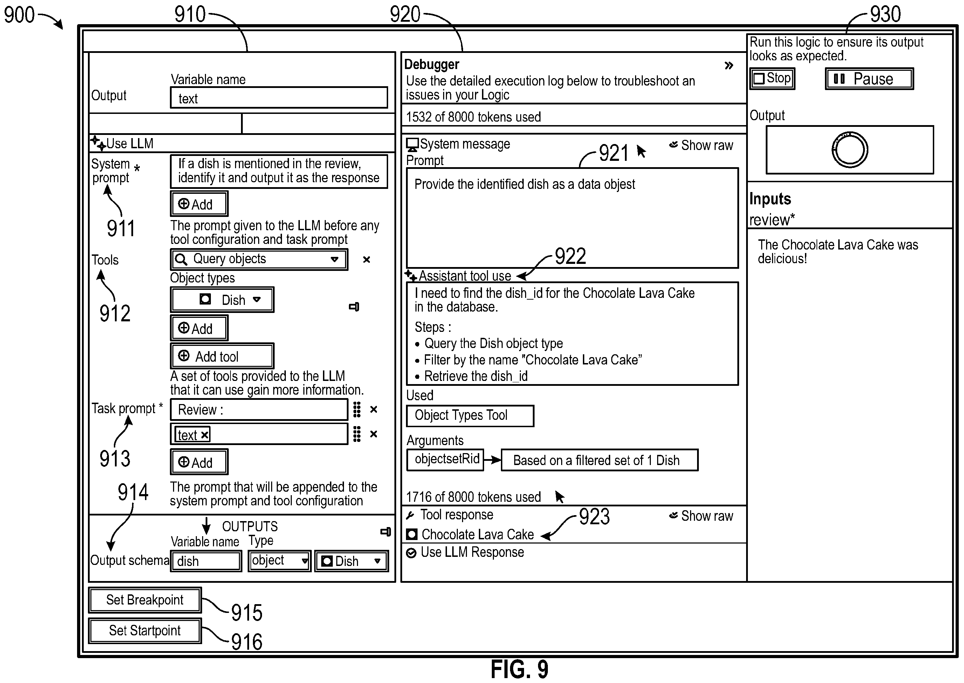

Figure 9 illustrates an example user interface 900 continuing the example from Figure 8. As shown in Figure 9, prompt modification pane 810 has been utilized to modify the LLM prompt. Specifically, as shown in tools control 812, the prompt has been modified to set up the "Query objects" tool to be called by the LLM. Further, as shown in output schema control 814, the prompt has been modified to request that the response be formatted as a Dish Object Type, rather than a primitive text string.

As shown in Figure 9, debugger pane 820 displays the updated interactions between the system and the LLM after the prompt is modified and execution is resumed. For example, system prompt 921 indicates that the output should be provided as a data object. Tool call 922 indicates that the LLM invoked a tool to retrieve the data object associated with the identified dish. Tool response 923 displays a selectable link to the retrieved data object. As shown in Figure 9, execution pane 820 enables a user to manually stop or pause execution of the interactions while execution is proceeding.

### Additional Example Implementations and Details

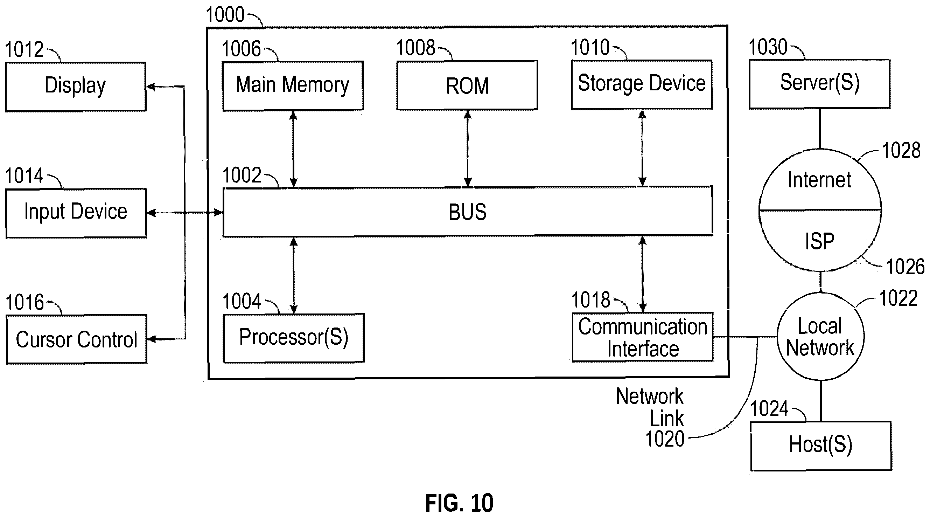

In an implementation the systems or devices described herein (e.g., one or more aspects of the AIS 102, data processing services 120, user device 150, LLM 130 and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 10) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, Figure 10 shows a block diagram that illustrates a computer system 1000 upon which various implementations and/or aspects (e.g., one or more aspects of the AIS 102, one or more aspects of the data processing services 120, one or more aspects of the user device(s) 150, one or more aspects of the LLM 130, and/or the like) may be implemented. Multiple such computer systems 1000 may be used in various implementations of the present disclosure. Computer system 1000 includes a bus 1002 or other communication mechanism for communicating information, and a hardware processor, or multiple processors, 1004 coupled with bus 1002 for processing information. Hardware processor(s) 1004 may be, for example, one or more general purpose microprocessors.

Computer system 1000 also includes a main memory 1006, such as a random-access memory (RAM), cache and/or other dynamic storage devices, coupled to bus 1002 for storing information and instructions to be executed by processor 1004. Main memory 1006 also may be used for storing temporary variables or other intermediate information during execution of instructions to be executed by processor 1004. Such instructions, when stored in storage media accessible to processor 1004, render computer system 1000 into a special-purpose machine that is customized to perform the operations specified in the instructions. The main memory 1006 may, for example, include instructions to implement server instances, queuing modules, memory queues, storage queues, user interfaces, and/or other aspects of functionality of the present disclosure, according to various implementations.

Computer system 1000 further includes a read only memory (ROM) 1008 or other static storage device coupled to bus 1002 for storing static information and instructions for processor 1004. A storage device 1010, such as a magnetic disk, optical disk, or USB thumb drive (Flash drive), and/or the like, is provided and coupled to bus 1002 for storing information and instructions.

Computer system 1000 may be coupled via bus 1002 to a display 1012, such as a cathode ray tube (CRT) or LCD display (or touch screen), for displaying information to a computer user. An input device 1014, including alphanumeric and other keys, is coupled to bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 1000 may include a user interface module to implement a GUI that may be stored in a mass storage device as computer executable program instructions that are executed by the computing device(s). Computer system 1000 may further, as described below, implement the techniques described herein using customized hard-wired logic, one or more ASICs or FPGAs, firmware and/or program logic which in combination with the computer system causes or programs computer system 1000 to be a special-purpose machine. According to one implementation, the techniques herein are performed by computer system 1000 in response to processor(s) 1004 executing one or more sequences of one or more computer-readable program instructions contained in main memory 1006. Such instructions may be read into main memory 1006 from another storage medium, such as storage device 1010. Execution of the sequences of instructions contained in main memory 1006 causes processor(s) 1004 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1004 for execution. For example, the instructions may initially be carried on a magnetic disk or solid-state drive of a remote computer. The remote computer can load the instructions into its dynamic memory and send the instructions over a telephone line using a modem. A modem local to computer system 1000 can receive the data on the telephone line and use an infra-red transmitter to convert the data to an infra-red signal. An infra-red detector can receive the data carried in the infra-red signal and appropriate circuitry can place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

Computer system 1000 also includes a communication interface 1018 coupled to bus 1002. Communication interface 1018 provides a two-way data communication coupling to a network link 1020 that is connected to a local network 1022. For example, communication interface 1018 may be an integrated services digital network (ISDN) card, cable modem, satellite modem, or a modem to provide a data communication connection to a corresponding type of telephone line. As another example, communication interface 1018 may be a local area network (LAN) card to provide a data communication connection to a compatible LAN (or WAN component to communicated with a WAN). Wireless links may also be implemented. In any such implementation, communication interface 1018 sends and receives electrical, electromagnetic, or optical signals that carry digital data streams representing various types of information.

Network link 1020 typically provides data communication through one or more networks to other data devices. For example, network link 1020 may provide a connection through local network 1022 to a host computer 1024 or to data equipment operated by an Internet Service Provider (ISP) 1026. ISP 1026 in turn provides data communication services through the worldwide packet data communication network now commonly referred to as the "Internet" 1028. Local network 1022 and Internet 1028 both use electrical, electromagnetic, or optical signals that carry digital data streams. The signals through the various networks and the signals on network link 1020 and through communication interface 1018, which carry the digital data to and from computer system 1000, are example forms of transmission media.

Computer system 1000 can send messages and receive data, including program code, through the network(s), network link 1020 and communication interface 1018. In the Internet example, a server 1030 might transmit a requested code for an application program through Internet 1028, ISP 1026, local network 1022 and communication interface 1018.

The received code may be executed by processor 1004 as it is received, and/or stored in storage device 1010, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computer-implemented method performed by a computing system having one or more hardware computer processors and one or more non-transitory computer readable storage device storing software instructions executable by the computing system to manage interactions with a large language model (LLM), the computer-implemented method comprising: receiving one or more user inputs from a user via a graphical user interface, the one or more user inputs indicating: a task to be performed by an LLM; one or more tools that are available to the system, which may be accessed by the system in response to tool calls from the LLM; and an output schema for structuring a format of a response from the LLM; accessing tool information relating to the one or more tools; identifying one or more example tool operations associated with the one or more tools; and generating a prompt for the LLM including indications of the one or more tools, the one or more example tool operations, the task to be performed, and the output schema.

Clause 2. The computer-implemented method of Clause 1, wherein the one or more tools comprises one or more of a query object tool for querying data in an ontology, an action tool for applying one or more actions, an ontology function tool, a date/time tool, or a calculator tool.

Clause 3. The computer-implemented method of Clause 1, wherein the one or more user inputs further comprises an indication of one or more object types or one or more action types associated with the one or more tools.

Clause 4. The computer-implemented method of Clause 1, wherein the one or more example tool operations are based on an ontology, the ontology defining a structure of data stored in a database associated with the system.

Clause 5. The computer-implemented method of Clause 1, wherein the tool information comprises instructions for implementing the one or more tools.

Clause 6. The computer-implemented method of Clause 5, wherein the tool information comprises instructions for accessing data in an ontology.

Clause 7. The computer-implemented method of Clause 5, wherein the tool information comprises instructions for processing data from an otology associated with the system, including filtering data and aggregating data.

Clause 8. The computer-implemented method of Clause 1, further comprising generating an ontology query to access data in an ontology, based on parsing an output from the LLM.

Clause 9. The computer-implemented method of Clause 1, further comprising generating a subsequent prompt based on restructuring an ontology query response, the subsequent prompt comprising textual data associated with the ontology query response and at least a portion of the prompt.

Clause 10. The computer-implemented method of Clause 1, wherein the output schema includes one or more data formats defined by an ontology, the one or more data formats corresponding to one or more data object types of the ontology.

Clause 11. The computer-implemented method of Clause 1, wherein the output schema includes a variable having a variable name, the computer-implemented method further comprising saving a response from the LLM to the variable.

Clause 12. The computer-implemented method of Clause 1, further comprising displaying one or more portions of the prompt to the user within a debug panel.

Clause 13. The computer-implemented method of Clause 1, further comprising displaying one or more outputs from the LLM or one or more operations performed by the system to a user within a debug panel.

Clause 14. The computer-implemented method of Clause 1, further comprising hiding one or more portions of the prompt from a view of the user and in response to a user selection via the graphical user interface, displaying the one or more portions of the prompt to the user.

Clause 15. A system comprising: a computer readable storage medium having program instructions embodied therewith; and one or more processors configured to execute the program instructions to cause the system to: receive one or more user inputs from a user via a graphical user interface, the one or more user inputs indicating: a task to be performed by an LLM; one or more tools that are available to the system, which may be accessed by the system in response to tool calls from the LLM; and an output schema for structuring a format of a response from the LLM; access tool information relating to the one or more tools; identify one or more example tool operations associated with the one or more tools; and generate a prompt for the LLM including indications of the one or more tools, the one or more example tool operations, the task to be performed, and the output schema.

Clause 16. Non-transitory computer-readable media including computer-executable instructions that, when executed by a computing system, cause the computing system to perform operations comprising: receiving one or more user inputs from a user via a graphical user interface, the one or more user inputs indicating: a task to be performed by an LLM; one or more tools that are available to the system, which may be accessed by the system in response to tool calls from the LLM; and an output schema for structuring a format of a response from the LLM; accessing tool information relating to the one or more tools; identifying one or more example tool operations associated with the one or more tools; and generating a prompt for the LLM including indications of the one or more tools, the one or more example tool operations, the task to be performed, and the output schema.

Clause 17. A computer-implemented method for managing interactions with a large language model (LLM), the computer-implemented method comprising: receiving one or more user inputs from a user via a graphical user interface, the one or more user inputs comprising: a task to be performed by an LLM; an indication of one or more system tools associated with a system and useful for performing the task, the one or more system tools comprising a query object tool, the query object tool comprising a query object operation defining a query structure; and an indication of an object type having one or more object parameters, the object type associated with the query object tool, the query object tool configured to perform the query object operation on the object type; generating a prompt as input to the LLM, the prompt comprising the one or more user inputs; responsive to providing the prompt as input to the LLM, receiving from the LLM an LLM output, the LLM output comprising a tool call structured according to the query structure defined by the query object operation of the query object tool, the tool call configured to identify an object within an external data source; responsive to querying the external data source using the tool call, receiving from the external data source a query response comprising an object ID; generating a second prompt as input to the LLM, the second prompt comprising the object ID and at least a portion of the prompt or at least a portion of the LLM output; and responsive to providing the second prompt as input to the LLM, receiving from the LLM a second LLM output, the second LLM output comprising a response to the user associated with the task to be performed.

Clause 18. A computer-implemented method for debugging language model interactions, the method performed by a computing system having one or more hardware computer processors and one or more non-transitory computer readable storage device storing software instructions executable by the computing system to perform the computerized method comprising: monitoring interactions between the computing system and a large language model (LLM), the interactions comprising one or more prompts to an LLM and one or more responses from the LLM; determining if a breakpoint condition is met; in response to detecting a breakpoint condition: pausing execution of the interactions; and enabling user modification of the one or more prompts to the LLM; and resuming execution of the interactions with a subsequent prompt to the LLM that has been updated responsive to the user modification of the one or more prompts.

Clause 19. The computer-implemented method of Clause 18, wherein the interactions are configured to accomplish a task indicated by user input.

Clause 20. The computer-implemented method of Clause 19, wherein the task includes multiple sub-tasks, each of the sub-tasks including a prompt to the LLM and a response from the LLM.

Clause 21. The computer-implemented method of Clause 20, wherein at least one of the sub-tasks comprises sending a second prompt to a second LLM and receiving a second response from the second LLM.

Clause 22. The computer-implemented method of Clause 18, further comprising: receiving or accessing a response from the LLM; determining that at least a portion of the response contains indications of a format other than natural language; generating a visualization of the at least a portion of the response based on at least the format other than natural language; and displaying the visualization on a user interface.

Clause 23. The computer-implemented method of Clause 22, wherein determining that at least a portion of the response contains indications of a format other than natural language further comprises: identifying text in the response indicating a tool call; identifying a data processing service associated with the tool call; and determining a format other than natural language associated with the data processing service.

Clause 24. The computer-implemented method of Clause 22, wherein the format other than natural language is a data object format.

Clause 25. The computer-implemented method of Clause 24, wherein the visualization comprises a selectable link associated with a data object.

Clause 26. The computer-implemented method of Clause 22, wherein the format other than natural language is an infographic.

Clause 27. A computer-implemented method for debugging language model interactions, the method performed by a computing system having one or more hardware computer processors and one or more non-transitory computer readable storage device storing software instructions executable by the computing system to perform the computerized method comprising: identifying a starting point for execution of a set of interactions between the computing system and a large language model (LLM), the interactions comprising one or more prompts to an LLM and one or more responses from the LLM, wherein the interactions include a plurality of interactions and the starting point is before at least one of the interactions; loading a conversation history associated with the starting point; and enabling user modification of the conversation history; and restarting execution of the set of interactions with a subsequent prompt to the starting point, wherein the subsequent prompt includes at least some of one the conversation history prior to the starting point.

Clause 28. The computer-implemented method of Clause 27, further comprising: determining if a breakpoint condition is met; in response to detecting a breakpoint condition: pausing execution of the interactions; and enabling user modification of the one or more prompts to the LLM; and resuming execution of the interactions with a subsequent prompt to the LLM that has been updated responsive to the user modification of the one or more prompts.

Clause 29. The computer-implemented method of Clause 27, wherein the set of interactions are configured to accomplish a task indicated by user input.

Clause 30. The computer -implemented method of Clause 29, wherein the task includes multiple sub-tasks, each of the sub-tasks including a prompt to the LLM and a response from the LLM.

Clause 31. The computer-implemented method of Clause 30, wherein at least one of the sub-tasks comprises sending a second prompt to a second LLM and receiving a second response from the second LLM.

Clause 32. The computer-implemented method of Clause 27, further comprising: receiving or accessing a response from the LLM; determining that at least a portion of the response contains indications of a format other than natural language; generating a visualization of the at least a portion of the response based on at least the format other than natural language; and displaying the visualization on a user interface.

Clause 33. The computer-implemented method of Clause 32, wherein determining that at least a portion of the response contains indications of a format other than natural language further comprises: identifying text in the response indicating a tool call; identifying a data processing service associated with the tool call; and determining a format other than natural language associated with the data processing service.

Clause 34. The computer-implemented method of Clause 32, wherein the format other than natural language is a data object format.

Clause 35. A computing system comprising: one or more hardware computer processors; and one or more non-transitory computer readable storage device storing software instructions executable by the computing system to: monitor interactions between the computing system and a large language model (LLM), the interactions comprising one or more prompts to an LLM and one or more responses from the LLM; determine if a breakpoint condition is met; in response to detecting a breakpoint condition: pause execution of the interactions; and enable user modification of the one or more prompts to the LLM; and resume execution of the interactions with a subsequent prompt to the LLM that has been updated responsive to the user modification of the one or more prompts.

Clause 36. The computing system of Clause 35, wherein the interactions are configured to accomplish a task indicated by user input.

Clause 37. The computing system of Clause 36, wherein the task includes multiple sub-tasks, each of the sub-tasks including a prompt to the LLM and a response from the LLM.

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

## Claims

1. A computer-implemented method performed by a computing system having one or more hardware computer processors and one or more non-transitory computer readable storage device storing software instructions executable by the computing system to manage interactions with a large language model (LLM), the computer-implemented method comprising:
receiving one or more user inputs from a user via a graphical user interface, the one or more user inputs indicating:
a task to be performed by an LLM;
one or more tools that are available to the system, which may be accessed by the system in response to tool calls from the LLM; and
an output schema for structuring a format of a response from the LLM;
accessing tool information relating to the one or more tools;
identifying one or more example tool operations associated with the one or more tools; and
generating a prompt for the LLM including indications of the one or more tools, the one or more example tool operations, the task to be performed, and the output schema.

2. The computer-implemented method of any preceding Claim, wherein the one or more tools comprises one or more of a query object tool for querying data in an ontology, an action tool for applying one or more actions, an ontology function tool, a date/time tool, or a calculator tool.

3. The computer-implemented method of any preceding Claim, wherein the one or more user inputs further comprises an indication of one or more object types or one or more action types associated with the one or more tools.

4. The computer-implemented method of any preceding Claim, wherein the one or more example tool operations are based on an ontology, the ontology defining a structure of data stored in a database associated with the system.

5. The computer-implemented method of any preceding Claim, wherein the tool information comprises instructions for implementing the one or more tools and, optionally, wherein the tool information comprises instructions for accessing data in an ontology, and further optionally, wherein the tool information comprises instructions for processing data from an ontology associated with the system, including filtering data and aggregating data.

6. The computer-implemented method of any preceding Claim, further comprising generating an ontology query to access data in an ontology, based on parsing an output from the LLM.

7. The computer-implemented method of any preceding Claim, further comprising generating a subsequent prompt based on restructuring an ontology query response, the subsequent prompt comprising textual data associated with the ontology query response and at least a portion of the prompt.

8. The computer-implemented method of any preceding Claim, wherein the output schema includes one or more data formats defined by an ontology, the one or more data formats corresponding to one or more data object types of the ontology.

9. The computer-implemented method of any preceding Claim, wherein the output schema includes a variable having a variable name, the computer-implemented method further comprising saving a response from the LLM to the variable.

10. The computer-implemented method of any preceding Claim, further comprising displaying one or more portions of the prompt to the user within a debug panel.

11. The computer-implemented method of any preceding Claim, further comprising displaying one or more outputs from the LLM or one or more operations performed by the system to a user within a debug panel.

12. The computer-implemented method of any preceding Claim, further comprising hiding one or more portions of the prompt from a view of the user and in response to a user selection via the graphical user interface, displaying the one or more portions of the prompt to the user.

13. A system comprising:
a computer readable storage medium having program instructions embodied therewith; and
one or more processors configured to execute the program instructions to cause the system to:
receive one or more user inputs from a user via a graphical user interface, the one or more user inputs indicating:
a task to be performed by an LLM;
one or more tools that are available to the system, which may be accessed by the system in response to tool calls from the LLM; and
an output schema for structuring a format of a response from the LLM;
access tool information relating to the one or more tools;
identify one or more example tool operations associated with the one or more tools; and
generate a prompt for the LLM including indications of the one or more tools, the one or more example tool operations, the task to be performed, and the output schema.

14. Non-transitory computer-readable media including computer-executable instructions that, when executed by a computing system, cause the computing system to perform operations comprising:
receiving one or more user inputs from a user via a graphical user interface, the one or more user inputs indicating:
a task to be performed by an LLM;
one or more tools that are available to the system, which may be accessed by the system in response to tool calls from the LLM; and
an output schema for structuring a format of a response from the LLM;
accessing tool information relating to the one or more tools;
identifying one or more example tool operations associated with the one or more tools; and
generating a prompt for the LLM including indications of the one or more tools, the one or more example tool operations, the task to be performed, and the output schema.

15. A computer-implemented method for managing interactions with a large language model (LLM), the computer-implemented method comprising:
receiving one or more user inputs from a user via a graphical user interface, the one or more user inputs comprising:
a task to be performed by an LLM;
an indication of one or more system tools associated with a system and useful for performing the task, the one or more system tools comprising a query object tool, the query object tool comprising a query object operation defining a query structure; and
an indication of an object type having one or more object parameters, the object type associated with the query object tool, the query object tool configured to perform the query object operation on the object type;
generating a prompt as input to the LLM, the prompt comprising the one or more user inputs;
responsive to providing the prompt as input to the LLM, receiving from the LLM an LLM output, the LLM output comprising a tool call structured according to the query structure defined by the query object operation of the query object tool, the tool call configured to identify an object within an external data source;
responsive to querying the external data source using the tool call, receiving from the external data source a query response comprising an object ID;
generating a second prompt as input to the LLM, the second prompt comprising the object ID and at least a portion of the prompt or at least a portion of the LLM output; and
responsive to providing the second prompt as input to the LLM, receiving from the LLM a second LLM output, the second LLM output comprising a response to the user associated with the task to be performed.
